(19) Europäisches Patentamt / European Patent Office / Office européen des brevets

(11) **EP 2 789 878 B1**

(12) **EUROPEAN PATENT SPECIFICATION**

(45) Date of publication and mention
of the grant of the patent:
**13.01.2016 Bulletin 2016/02**

(51) Int Cl.:
*F16H 59/46* (2006.01)    *F16H 61/04* (2006.01)

(21) Application number: **14162367.8**

(22) Date of filing: **28.03.2014**

(54) **Automatic transmission**

Automatikgetriebe

Transmission automatique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2013  JP 2013084238**

(43) Date of publication of application:
**15.10.2014  Bulletin 2014/42**

(73) Proprietor: **Yamaha Hatsudoki Kabushiki Kaisha
Iwata-shi, Shizuoka 438-8501 (JP)**

(72) Inventor: **Minami, Kengo
Iwata-shi, Shizuoka 438-8501 (JP)**

(74) Representative: **Grünecker Patent- und
Rechtsanwälte
PartG mbB
Leopoldstraße 4
80802 München (DE)**

(56) References cited:
**EP-A1- 2 075 492      EP-A1- 2 784 356
WO-A1-2007/132106   DE-U1-202011 050 731**

**Description**

The present invention relates to an automatic transmission that changes a rotation speed of a main shaft, to which a torque from a power source is transmitted, and transmits the rotation of the changed speed to a driveshaft.

An automatic transmission includes a main shaft, to which a torque from an engine or other power source is transmitted via a clutch, and a driveshaft to which the rotation of the main shaft is transmitted upon being changed in speed (see, for example, EP 2075492 A1, which discloses an automatic transmission according to the preamble of claim 1). The rotation of the main shaft is transmitted to the driveshaft via a transmission gear pair. A single transmission gear pair is selected from a plurality of transmission gear pairs and the rotation of the main shaft is transmitted to the driveshaft by the selected transmission gear pair. The rotation speed of the main shaft is changed at a gear ratio that is in accordance with the selected transmission gear pair. The gear ratio can thus be changed by changing the transmission gear pair to be selected.

The selection of the transmission gear pair is achieved by engaging one of a plurality of dog clutches provided on the main shaft or on the driveshaft. The dog clutches include drive dogs that are in constant synchronous rotation with the main shaft and driven dogs that are in constant synchronous rotation with the driveshaft. By making a drive dog and a driven dog approach or separate from each other, the drive dog and the driven dog can be engaged or disengaged. In the engaged state, the drive dog and the driven dog define a projection-recess coupling and transmit the torque in a slipless state.

The automatic transmission includes a switching mechanism that drives the dog clutches to switch the gear stage and an actuator that applies an actuating force to the switching mechanism. The actuator actuates in response to a gear-change command.

A dog collision may occur in which the drive dog and the driven dog contact each other in a non-engaging state before attaining the projection-recess coupling state. The drive dog and the driven dog attain the projection-recess coupling state after the dog collision is resolved.

When a large impact occurs in accompaniment with the dog collision, this may cause vibration or abnormal noise that may give an uncomfortable feeling to a user. It may thus be considered to move the dog clutches slowly so that a large impact does not occur and thereby to reduce the uncomfortable feeling given to the user.

However, a gear-change operation is not completed until the drive dog and the driven dog engage. Until the gear-change operation is completed, a disconnected state continues and the torque transmission from the power source to the main shaft is disconnected or is weakened. Therefore, if a long time is required for the drive dog and the driven dog to engage, there is a long waiting time until the driving force that is in accordance with the gear stage after the gear-change is transmitted to the driveshaft and this may give an uncomfortable feeling to the user. It is an object of the present invention to provide an automatic transmission capable of overcoming these problems. According to the present invention said object is solved by an automatic transmission having the features of independent claim 1. Preferred embodiments are laid down in the dependent claims

The present teaching provides an automatic transmission that changes a rotation speed of a main shaft, to which a torque from a power source is transmitted, transmits the rotation of the changed rotation speed to a driveshaft, and includes: a plurality of dog clutches that each include a drive dog provided on the main shaft or on the driveshaft so as to be in constant synchronous rotation with the main shaft, and a driven dog provided on the main shaft or on the driveshaft so as to be in constant synchronous rotation with the driveshaft, a switching mechanism configured to cause the drive dog and the driven dog of each of the dog clutches to approach and separate from each other to engage and disengage the drive dog and the driven dog of each of the dog clutches to switch gears transmitting a driving force between the main shaft and the driveshaft; a clutch switchable between a connected state, in which the torque is transmitted sliplessly from the power source to the main shaft, and a disconnected state, in which a portion of the torque is slippingly transmitted from the power source to the main shaft or in which the torque is not transmitted from the power source to the main shaft; an actuator unit for actuating at least the switching mechanism among the clutch and the switching mechanism; and a gear-change control means configured to control a gear-change operation, including a dog engaging operation of making the actuator unit actuate to engage the drive dog and the driven dog of one of the dog clutches, is controlled based on a relative rotational position of the drive dog and the driven dog to be engaged.

With this arrangement, the torque from the power source is transmitted to the main shaft via the clutch, and then the rotation of the main shaft is changed in speed and transmitted to the driveshaft. The torque is transmitted from the power source to the main shaft when the clutch is in the connected state or in the disconnected state of transmitting a portion of the torque. The drive dog that is in constant or always synchronous rotation with the main shaft and the driven dog that is in constant or always synchronous rotation with the driveshaft are provided on the main shaft or on the driveshaft. Rotation is thus transmitted from the main shaft to the driveshaft by engaging the drive dog and the driven dog. Engagement and disengagement of the drive dog and the driven dog are performed by the switching mechanism that makes the dogs approach and separate from each other. The switching mechanism is actuated by the actuator unit. The gear-change control means controls the gear-change operation based on the relative rotational position of the drive dog and the driven dog to be engaged. The gear-change operation includes the dog engaging operation of making the actuator unit actuate to engage the drive dog and the driven dog. By the gear-change operation being controlled based on the relative rotational position of the drive dog and the driven dog, a dog collision can be avoided, or a duration of the dog collision can be shortened, or control that is in accordance with the circumstances of the dog collision can be performed. Influences due to the dog collision, especially an uncomfortable feeling felt by a user can thereby be reduced.

"Constant synchronous rotation" refers to rotation in accordance with the corresponding shaft (the main shaft or the driveshaft) even when the drive dog and the driven dog are not engaged.

No matter whether the drive dog and the driven dog are engaged or not, the drive dog is always in synchronous rotation with the main shaft, while the driven dog is always in synchronous rotation with the drive shaft. In a preferred embodiment of the present invention, after receiving a gear-change command, the gear-change control means is configured to control a starting timing of the gear-change operation so that the engaged state is attained without occurrence of a dog collision in which the drive dog and the driven dog come in contact or abutment before engagement. With this arrangement, upon receiving the gear-change command, the gear-change control means controls the starting timing of the gear-change operation based on the relative rotational position of the drive dog and the driven dog to be engaged. The gear-change control means thereby makes the drive dog and the driven dog reach the engaged state without occurrence of a dog collision in which the dogs come in contact or abutment before engagement. The time from the disengagement (dog extraction) of a drive dog and a driven dog, corresponding to the gear stage before the gear-change, to the engagement (dog entry) of a drive dog and a driven dog, corresponding to the gear stage after the gear-change, can thereby be shortened and the time during which the driving force is not transmitted to the driveshaft (drive cutoff time) can thus be shortened. The influences due to the dog collision, especially the uncomfortable feeling felt by the user can thereby be reduced and an automatic transmission with a good feeling of use can be provided.

More specifically, after receiving the gear-change command, the gear-change control means may be configured to control an actuation timing of the actuator unit such that the drive dog and the driven dog are put in the engaged state without occurrence of the dog collision. By controlling the actuation timing of the actuator unit for the switching mechanism that switches the gears that transmit the driving force between the main shaft and the driveshaft, the gear-change control means puts the drive dog and the driven dog in the engaged state without occurrence of the dog collision, in which the dogs come in contact or abutment before engagement. The time from the disengagement (dog extraction) of the drive dog and the driven dog, corresponding to the gear stage before the gear-change, to the engagement (dog entry) of the drive dog and the driven dog, corresponding to the gear stage after the gear-change, can thereby be shortened and the time during which the driving force is not transmitted to the driveshaft (drive cutoff time) can thus be shortened. The influences due to the dog collision, especially the uncomfortable feeling felt by the user can thereby be reduced and an automatic transmission with a good feeling of use can be provided.

The gear-change command may be generated in response to a gear-change operating unit operated by an operator or may be generated automatically by a control unit based on vehicle travelling information. That is, the gear-change command may be generated in response to a manual operation of the gear-change operating unit or the control unit may generate the gear-change command automatically based on the vehicle travelling information. In either case, the gear-change operation can be performed while avoiding a dog collision, and therefore the influences due to the dog collision, especially the uncomfortable feeling felt by the user can be reduced.

In a preferred embodiment of the present invention, for the gear-change operation, the gear-change control means is configured to control the actuator unit based on the relative rotational position of the drive dog and the driven dog to be engaged. The actuator unit can thereby be made to actuate based on the relative rotational position of the drive dog and the driven dog to be engaged and the operation performed when engaging the drive dog and the driven dog can be controlled appropriately based on the relative rotational position. The influences due to a dog collision, especially the uncomfortable feeling felt by the user can thereby be reduced.

In a preferred embodiment of the present invention, for the gear-change operation, the gear-change control means is configured to set, based on the relative rotational position of the drive dog and the driven dog to be engaged, a clutch actuation starting timing, at which the clutch starts a state transition from the connected state to the disconnected state, and is configured to control the actuator unit based on the clutch actuation starting timing. When the gear-change operation sequence begins with the actuation of the clutch, by adjusting the clutch actuation starting timing, the timings of subsequent operations making up the gear-change operation are also adjusted indirectly. The influences due to a dog collision, especially the uncomfortable feeling felt by the user can thereby be reduced.

The clutch may be arranged such that a drive side friction member and a driven side friction member, which are relatively movable to mutually contact and separate, are put in contact to transmit the torque. In this case, the timing at which the clutch starts the state transition from the connected state to the disconnected state may specifically be a timing at which the drive side friction member and the driven side friction member of the clutch begin to slip.

In a preferred embodiment of the present invention, for the gear-change operation, the gear-change control means is configured to set, based on the relative rotational position of the drive dog and the driven dog to be engaged, a gear switching starting timing, at which the actuation of the switching mechanism starts, and is configured to control the actuator unit based on the gear switching starting timing. When the gear-change operation sequence begins with the actuation of the switching mechanism, by adjusting the gear switching starting timing at which the actuation of the switching mechanism starts, the timings of the subsequent operations making up the gear-change operation are also adjusted indirectly. Obviously, even if the gear-change operation sequence does not begin with the actuation of the switching mechanism, the gear switching starting timing can be controlled by controlling the starting timing of the gear-change operation. The gear switching starting time is thus set appropriately based on the relative rotational position of the drive dog and the driven dog to be engaged, and the actuator unit is controlled based on the gear switching starting timing. The influences due to a dog collision, especially the uncomfortable feeling felt by the user can thereby be reduced.

In a preferred embodiment of the present invention, for the gear-change operation, the gear-change control means is configured to set, based on the relative rotational position of the drive dog and the driven dog to be engaged, an output changing timing, at which an output of the power source is changed, and is configured to change the output of the power source at the set output changing timing. When the gear-change operation sequence begins with a change of output of the power source, by adjusting the output changing timing, the timings of the subsequent operations making up the gear-change operation are also adjusted indirectly. The influences due to a dog collision, especially the uncomfortable feeling felt by the user can thereby be reduced.

In a preferred embodiment of the present invention, in response to receiving the gear-change command, the gear-change control means is configured to predict whether or not a dog collision, in which the drive dog and the driven dog come in contact or abutment before engaging, will occur and, if a dog collision is predicted to occur, predict a duration of the dog collision, and controls the gear-change operation in accordance with the prediction result. With this arrangement, it is predicted whether or not a dog collision of the drive dog and the driven dog that are to be engaged will occur, and if a dog collision is predicted to occur, the duration thereof is predicted. By the gear-change operation being controlled based on the prediction result, problems due to the dog collision can be avoided or alleviated, and the influences of the dog collision, especially the uncomfortable feeling felt by the user can be reduced. The prediction of whether or not a dog collision will occur or the prediction of the duration of the dog collision may preferably be performed under the assumption that the gear-change operation is started immediately after receiving the gear-change command.

In a preferred embodiment of the present invention, the gear-change control means is configured to predict the duration of the dog collision, set a weak torque transmission time in accordance with the predicted duration of the dog collision, and control the clutch to be in a weak torque transmission state, in which the torque from the power source is attenuatingly transmitted to the main shaft, for the weak torque transmission time in the middle of switching the clutch from the connected state to the state in which the torque transmission from the power source to the main shaft is disconnected. With this arrangement, the weak torque transmission time is set in accordance with the duration of the dog collision, and the clutch is controlled to be in the weak torque transmission state in the middle of reaching the completely disconnected state (the state in which the torque from the power source is not transmitted at all) from the connected state. The weak torque transmission state is a state (a mode of the disconnected state) in which the torque from the power source is transmitted to the main shaft upon being attenuated at the clutch.

If the torque transmission from the power source is completely disconnected in the state in which a dog collision is occurring, the drive dog and the driven dog in the dog collision state co-rotate due to a frictional force and a relative speed of the dogs decreases, so that a long time is required to resolve the dog collision. Therefore by attaining a state in which a weak torque is transmitted to the drive dog as the weak torque transmission state and thereby delaying the complete disconnection of torque, the relative speed of the drive dog and the driven dog can be maintained at a large value to achieve early resolution of the dog collision. The influences of the dog collision, especially the uncomfortable feeling felt by the user can thereby be reduced. Also, the weak torque transmission time is set appropriately in accordance with the prediction result of the duration of the dog collision and the relative speed between the drive dog and the driven dog thus does not become excessively large during dog entry. The impact at engagement of the drive dog and the driven dog can thus be reduced and the occurrences of abnormal noise and vibration that accompany the impact can be reduced.

In the present invention, the automatic transmission is arranged to transmit the driving force of the power source that is input into the main shaft to a drive wheel via the driveshaft, and the gear-change control means is configured to determine the relative rotational position of the drive dog and the driven dog based on a rotational angle or a rotational speed of any of a plurality of rotating shafts disposed in a driving force transmission path from the power source to the drive wheel. With this arrangement, the relative rotational position of the drive dog and the driven dog can be determined accurately by using the rotational angle or the rotational speed of any of the plurality of rotating shafts disposed in the driving force transmission path from the power source to the drive wheel. The influences of a dog collision, especially the uncomfortable feeling felt by the user can be reduced. In particular, the gear-change control means is preferably configured to determine the relative rotational position of the drive dog and the driven dog based on the rotational angles or the rotational speeds of two or more rotating shafts among the plurality of rotating shafts. The relative rotational position can thereby be determined more accurately and the influences of the dog collision, especially the uncomfortable feeling felt by the user can thus be reduced even more effectively.

A preferred embodiment of the present invention further includes a rotation sensor detecting the rotation of the rotating shaft by detecting a projection disposed on the rotating shaft. The gear-change control means is configured to acquire the rotational angle or the rotational speed of the rotating shaft using an output signal of the rotation sensor. With this arrangement, the rotation of the rotating shaft is detected by the rotation sensor that detects the projection disposed on the rotating shaft and the rotational angle or the rotational speed of the rotating shaft is obtained using the output signal of the rotation sensor. The rotational angle or the rotational speed can thereby be determined even more accurately. The influences of a dog collision, especially the uncomfortable feeling felt by the user can thereby be reduced effectively.

The above and yet other objects, features, and effects of the present invention shall be made clear by the following description of the preferred embodiments in reference to the attached drawings.

BRIEF DESCRIPTION OF THE DRAWINGS

FIG. 1 is a side view for describing an arrangement of a motorcycle that includes an automatic transmission according to a first preferred embodiment of the present invention.
FIG. 2 is a diagram for describing an arrangement related to an engine unit of the motorcycle.
FIG. 3 is a diagram for describing an arrangement of transmission gears, a gear switching mechanism, etc.
FIG. 4 is a perspective view for describing an arrangement of a dog clutch provided between a pair of transmission gears.
FIG. 5A to FIG. 5C are diagrams for describing a relative angle of a drive dog and a driven dog.
FIG. 6A to FIG. 6D are explanatory diagrams illustrating operations of the dog clutch during gear-change.
FIG. 7 is a block diagram for describing an electrical arrangement related to the automatic transmission.
FIG. 8 is a time chart for describing an example of a gear-change operation in the preferred embodiment.
FIG. 9 is a time chart for describing a method for adjusting a waiting time from receiving of a gear-change command to starting of the gear-change operation, that is, a method for adjusting a gear-change operation starting timing.
FIG. 10 is a diagram for describing the calculation of a target dog relative angle.
FIG. 11 is a flowchart for describing the gear-change operation.
FIG. 12 is a flowchart for describing a process for calculating the dog relative angles of the drive dogs and the driven dogs of the respective dog clutches.
FIG. 14 is a flowchart for describing a process for predicting a dog collision duration.
FIG. 15 is a time chart for describing an example of a control operation that is in accordance with the predicted dog collision duration.
FIG. 16 is a diagram of an example of characteristics of a weak torque transmission time with respect to the dog collision duration.
FIG. 17 is a flowchart for describing a control example executed by a control unit.
FIG. 18 is a diagram for describing an example where the first preferred embodiment is applied to a dual clutch transmission.
FIG. 19 is a diagram of an operation example for a case where the first preferred embodiment is applied to an arrangement in which a shifter and a clutch are actuated by an actuator in common.

DETAILED DESCRIPTION OF THE PREFERRED EMBODIMENTS

An automatic transmission is an apparatus that changes a rotation speed of a main shaft, to which a torque from a power source is transmitted, and transmits the rotation changed in speed to a driveshaft. An automatic transmission according to a preferred embodiment of the present invention includes a drive dog provided on the main shaft or on the driveshaft so as to be in constant or always synchronous rotation with the main shaft and a driven dog provided on the main shaft or on the driveshaft so as to be in constant or always synchronous rotation with the driveshaft.

The drive dog and the driven dog make up a dog clutch in which these components are made to approach and separate from each other and thereby made to engage and disengage mutually by a switching mechanism that switches gears transmitting a driving force between the main shaft and the driveshaft. The structure is such that the drive dog and the driven dog define a projection-recess coupling and the drive dog and the driven dog thus cannot necessarily engage at any relative rotational position and there is a restriction in the relative rotational position at which mutual engagement is enabled. Therefore, in making the drive dog and the driven dog engage, a dog collision, with which these components come in contact or abutment before engagement, may occur. Due to the dog collision, a time from the start to completion of a gear-change operation becomes long and an impact may occur.

The present inventor noticed that a dog collision does not always occur during the gear-change operation and there are cases where the dog clutch is put in the engaged state without a dog collision occurring, and carried out research concerning the cause. As a result, the present inventor noticed that whether or not a dog collision occurs depends on the timing at which the gear-change operation is performed, and considered that it may be possible to reduce influences due to a dog collision by controlling such timing. The preferred embodiments of the present invention described below are based on this novel idea.

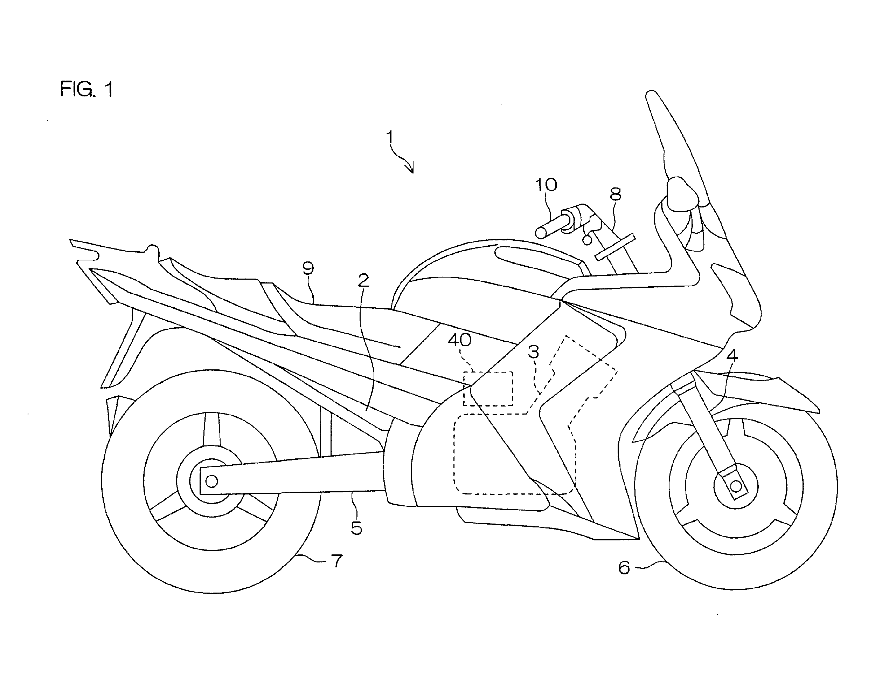

FIG. 1 is a side view for describing an arrangement of a vehicle that includes an automatic transmission according to a preferred embodiment of the present invention. The vehicle is a motorcycle 1, which is an example of a saddle type vehicle. The motorcycle 1 includes a vehicle body frame 2, an engine unit 3, a front fork 4, a swing arm 5, a front wheel 6, and a rear wheel 7. The engine unit 3 is installed and supported on the vehicle body frame 2. The front fork 4 is coupled to a front portion of the vehicle body frame 2. The front wheel 6 is rotatably supported by the front fork 4. The swing arm 5 is coupled to a lower rear portion of the vehicle body frame 2 in a manner enabling swinging in an up/down direction. The rear wheel 7 is rotatably coupled to a rear end portion of the swing arm 5.

A handle 8 is disposed above the front fork 4. The front wheel 6 and the handle 8 are coupled to the vehicle body frame 2 so as to be integrally rotated by a steering operation of a rider. A throttle grip 10, which rotates in accordance with an operation of the rider, is provided at one end portion, typically, a right end portion of the handle 8. A saddle type seat 9 on which occupants, such as the rider, etc., sit by straddling is disposed behind the handle 8 and is coupled to the vehicle body frame 2. The engine unit 3 is disposed below the seat 9.

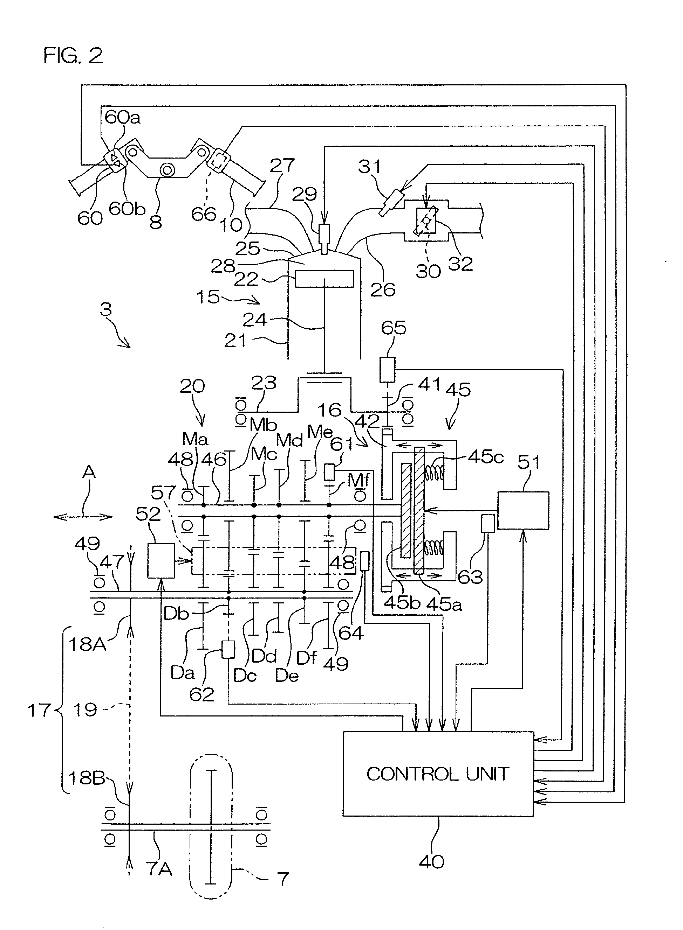

FIG. 2 is a diagram for describing an arrangement related to the engine unit 3. The engine unit 3 includes an engine 15 as a power source, a reduction mechanism 16, a transmitting mechanism 17, and an automatic transmission 20. The engine 15 includes a cylinder 21, a piston 22 that reciprocates inside the cylinder 21, a crankshaft 23, a connecting rod 24 coupling the piston 22 and the crankshaft 23, and a cylinder head 25.

The cylinder head 25 is coupled to the cylinder 21. An air supply passage 26 and an exhaust passage 27 are coupled to the cylinder head 25. A combustion chamber 28 is defined by the cylinder 21, the piston 22, and the cylinder head 25. The air supply passage 26 and the exhaust passage 27 are in communication with the combustion chamber 28. An ignition plug 29 that undergoes spark discharge inside the combustion chamber 28 is mounted on the cylinder head 25. A throttle valve 30 is disposed in the air supply passage 26. An injector 31 (fuel injector) is disposed between the throttle valve 30 and the combustion chamber 28. In the present preferred embodiment, the throttle valve 30 is driven by a valve actuator 32.

Fuel injected from the injector 31 is mixed with air supplied through the throttle valve 30 to become a mixed gas that is supplied to the combustion chamber 28. The mixed gas is explosively combusted and expanded inside the fuel chamber 28 by the spark discharge of the ignition plug 29. This causes a reciprocating motion of the piston 22. The reciprocating motion of the piston 22 is converted by the connecting rod 24 and the crankshaft 23 to a rotational motion of the crankshaft 23.

An opening degree of the throttle valve 30 is changed by the valve actuator 32. The valve actuator 32 is controlled by a control unit 40. An output signal of a throttle operation sensor 66 that detects a displacement amount of the throttle grip 10 is supplied to the control unit 40. The control unit 40 drives the valve actuator 32 based on the output signal of the throttle operation sensor 66. The opening degree of the throttle valve 30 is thereby controlled to be an opening degree that is in accordance with an operation amount of the throttle grip 10.

The reduction mechanism 16 includes a first gear 41 rotating integrally with the crankshaft 23 and a second gear 42 engaging with the first gear 41. The rotation of the crankshaft 23 is reduced in speed in accordance with a gear ratio of the first and second gears 41 and 42 and the speed-reduced rotation is transmitted to the automatic transmission 20.

The automatic transmission 20 includes a clutch 45, a main shaft 46, a driveshaft 47, a plurality of transmission gears Ma, Mb, Mc, Md, Me, Mf; Da, Db, Dc, Dd, De, and Df, a gear switching mechanism 50, a clutch actuator 51, and a shift actuator 52. In the present preferred embodiment, the gear switching mechanism 50 corresponds to a switching mechanism in the present invention. Also, the clutch actuator 51 and the shift actuator 52 correspond to an actuator unit in the present invention. That is, in the present preferred embodiment, the actuator unit includes the clutch actuator 51 that actuates the gear switching mechanism 50 and a shift actuator 52 that actuates the clutch 45.

The clutch 45 may, for example, be a friction clutch, such as a multiple disk friction clutch, a single disk friction clutch, etc. Specifically, the clutch 45 includes a drive side friction member 45a (for example, a friction disk) that rotates integrally with the second gear 42 of the reduction mechanism 16, and a driven side friction member 45b (for example, a clutch disk) that rotates integrally with the main shaft 46. The clutch 45 can be put in a connected state and a disconnected state. In the connected state, the drive side friction member 45a and the driven side friction member 45b are put in contact and coupled sliplessly, and the drive side friction member 45a and the driven side friction member 45b rotate integrally. In the disconnected state, a torque transmission between the drive side friction member 45a and the driven side friction member 45b is disconnected or only a portion of the torque of the drive side friction member 45a is transmitted to the driven side friction member 45b. In the connected state of the clutch 45, the drive side friction member 45a and the driven side friction member 45b are pressed against each other by a clutch spring 45c.

The clutch actuator 51 generates an actuating force that makes the clutch 45 transition from the connected state to the disconnected state or recover from the disconnected state to the connected state. The clutch actuator 51 can separate the drive side friction member 45a and the driven side friction member 45b against an elastic force of the clutch spring 45c and thereby put the clutch 45 in the disconnected state. In a completely disconnected state in which the drive side friction member 45a and the driven side friction member 45b are completely separated, the torque transmission is disconnected and the driven side friction member 45b rotates idly with respect to the driven side friction member 45a.

The arrangement of the clutch 45 is not restricted to that described above and another structure may be adopted instead. For example, a structure may be adopted where, in place of pressing the drive side friction member 45a and the driven side friction member 45b by means of the clutch spring 45c, the clutch actuator 51 may include a hydraulic actuator and the drive side friction member 45a and the driven side friction member 45b may be made to approach and separate from each other by the hydraulic actuator.

The main shaft 46 and the driveshaft 47 are disposed parallel to each other along an axial direction A. The main shaft 46 is supported by a bearing 48 so as to be rotatable around its axis. The driveshaft 47 is supported by a bearing 49 so as to be rotatable around its axis.

The plurality of transmission gears Ma, Mb, Mc, Md, Me, Mf; Da, Db, Dc, Dd, De, and Df transmit the rotation of the main shaft 46 to the driveshaft 47. The plurality of transmission gears include the plurality (six in the present preferred embodiment) of transmission gears Ma, Mb, Mc, Md, Me, and Mf disposed on the main shaft 46 and the plurality (six in the present preferred embodiment) of transmission gears Da, Db, Dc, Dd, De, and Df disposed on the driveshaft 47. The plurality of transmission gears Ma, Mb, Mc, Md, Me, and Mf on the main shaft 46 are respectively engaged with the plurality of transmission gears Da, Db, Dc, Dd, De, and Df on the driveshaft 47. In each pair of mutually engaged transmission gears, one transmission gear is arranged to rotate idly with respect to the shaft (the main shaft 46 or the driveshaft 47) on which it is provided and the other transmission gear is arranged to rotate integrally with the shaft (the driveshaft 47 or the main shaft 46) on which the transmission gear is provided. In the example shown in FIG. 2, the transmission gears Da, Mb, Dc, Dd, Me, and Df are provided so as to rotate idly with respect to the respectively corresponding shafts 46 and 47, and the respectively engaged transmission gears Ma, Db, Mc, Md, De, and Mf are provided so as to rotate integrally with the respectively corresponding shafts 46 and 47.

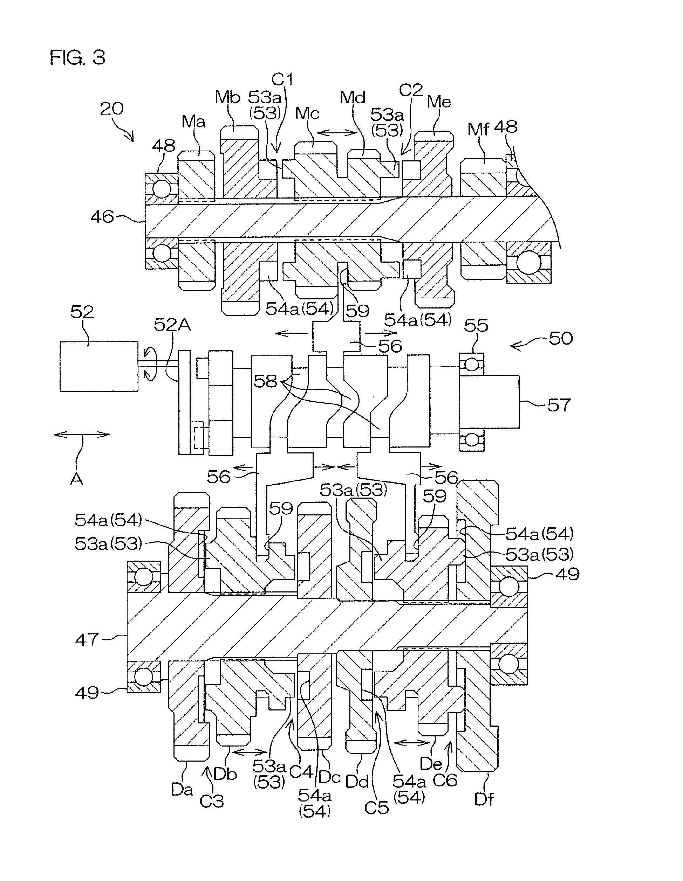

As shown most clearly in FIG. 3, the transmission gears Db, Mc, Md, and De that rotate integrally with the corresponding shafts are movable transmission gears provided so as to be movable in the axial direction A. The movable transmission gears Db, Mc, Md, and De are splined to the corresponding shafts. The movable transmission gears Db, Mc, Md, and De are provided with dogs 53 having projections 53a projecting in the axial direction A. More specifically, with the movable transmission gear Db, the dogs 53 are formed at both sides in the axial direction A. The movable transmission gears Mc and Md are formed integrally in the present preferred embodiment and the dogs 53 are formed at both sides in the axial direction A of the integrated movable transmission gears Mc and Md. Further, with the movable transmission gear De, the dogs 53 are formed at both sides in the axial direction A.

The transmission gears Da and Dc, Mb and Me, and Dd and Df that respectively face each other at opposite sides in the axial direction A of the movable transmission gears Db, Mc, Md, and De are transmission gears that do not move in the axial direction A. Dogs 54 having recesses 54a in which the projections 53a of the dogs 53 fit are respectively formed in the transmission gears Da and Dc, Mb and Me, and Dd and Df.

Pairs of mutually facing dogs 53 and 54 make up dog clutches C1 to C6 that are engaged or disengaged by axial movements of the movable transmission gears Db, Mc, Md, and De. When each of the dog clutches C1 to C6 is in the engaged state, the dogs 53 and 54 thereof define a projection-recess coupling and transmit a torque in a slipless state.

One dog among the pair of dogs 53 and 54 making up each of the dog clutches C1 to C6 is a drive dog that undergoes constant synchronous rotation with the main shaft 46 and the other dog is a driven dog that undergoes constant synchronous rotation with the driveshaft 47. That is, regardless of whether the corresponding dog clutch among the dog clutches C1 to C6 is in the engaged state or the disengaged state, a drive dog rotates synchronously with the main shaft 46 and the power from the engine 15 is applied thereto if the clutch 45 is in the torque transmitting state. A driven dog rotates synchronously with the driveshaft 7 regardless of whether the corresponding dog clutch among the dog clutches C1 to C6 is in the engaged state or the disengaged state. A drive dog may be disposed on the main shaft 46 or may be disposed on the driveshaft 47. Similarly, a driven dog may be disposed on the main shaft 46 or may be disposed on the driveshaft 47.

The movable transmission gears Db, Mc, Md, and De are provided to be movable in the axial direction A between engaging positions at which the dogs 53 and 54 of the dog clutches C1 to C6 are engaged and non-engaging positions at which the dogs 53 and 54 of the dog clutches C1 to C6 are not engaged. One of the dog clutches C1 to C6 is put in the engaged state at one time. The pair of transmission gears corresponding to the dog clutch in the engaged state rotate integrally. A gear ratio or speed-changing ratio between the main shaft 46 and the driveshaft 47 differs according to which dog clutch is put in the engaged state. A plurality of gear stages (speed-changing stages) can thereby be provided.

In a gear-change process, a movable transmission gear corresponding to a gear stage (new gear stage) that is newly set by a gear-change command is moved to the position at which the dog clutch of the new gear stage engages. The movable transmission gear and a transmission gear adjacent thereto are thereby engaged via the dog clutch and rotate integrally. The other dog clutches are put in the non-engaged states. That is, in the gear-change process, the corresponding movable transmission gear is selectively moved to the engaging position and engages with the adjacent transmission gear via the dog clutch in accordance with the content of the gear-change command (shift-up from first speed to second speed or shift-down from fourth speed to third speed, etc.). Also, so that the dog clutch corresponding to the gear stage (old gear stage) before the issuing of the gear-change command is put in the non-engaged state, the corresponding movable transmission gear is moved to the non-engaging position. The transmission gears transmitting the torque of the engine 15 to the rear wheel 7 are thereby switched.

For example, if the transmission gears De and Df are at the engaging positions (see FIG. 3) in a gear stage prior to the issuing of a gear-change command, the rotation of the main shaft 46 is transmitted to the driveshaft 47 via the transmission gears Mf, Df, and De. The gear-change ratio is in accordance with the gear ratio of the transmission gears Mf and Df. When the gear-change command is issued thereafter, for example, the movable transmission gear De is moved in the axial direction A so that the dog clutch C6 is disengaged and the dog clutch C5 is put in the engaged state. In this case, the rotation of the main shaft 46 is transmitted to the driveshaft 47 via the transmission gears Md, Dd, and De. The speed changing ratio is in accordance with the gear ratio of the transmission gears Md and Dd.

The gear switching mechanism 50 includes a plurality of shift forks 56, which respectively engage with the movable transmission gears Db, Mc, Md, and De, and a shift cam 57 for moving the shift forks 56 in the axial direction A. The shift cam 57 has an axial shape extending parallel to the main shaft 46 and the driveshaft 47, and is supported by a bearing 55 in a manner enabling rotation around its axis. A plurality of meandering cam grooves 58 for driving the shift forks 56 are formed along a circumferential direction on the outer circumferential surface of the shift cam 57. Base end portions of the shift forks 56 are respectively engaged with the plurality of cam grooves 58. On the other hand, tip portions of the respective shift forks 56 engage with annular grooves 59 respectively formed on the outer circumferential surfaces of the movable transmission gears Db, Mc, Md, and De.

By the shift cam 57 rotating around its axis, the shift forks 56 are moved in the axial direction A, and the corresponding movable transmission gears Db, Mc, Md, and De are thereby displaced in the axial direction A. A shifter 52A is coupled to the shift cam 57, and the shifter 52A is driven by the shift actuator 52. The shift actuator 52 drives the shifter 52A in accordance with the issuing of the gear-change command. The shift cam 57 is thereby rotated by a predetermined angle, and the one or a plurality of the movable transmission gears corresponding to the old gear stage and the new gear stage are thereby moved in the axial direction A together with the shift forks 56.

The shifter 52A is actuated by the shift actuator 52 from a neutral position to a shift-up position or a shift-down position, and the shift cam 57 is thereby rotated by a predetermined angle in a shift-up direction or a shift-down direction. Thereafter, the shifter 52A is returned to the neutral position by the shift actuator 52 or a spring member (not shown) for recovery. In the recovery operation of returning from the shift-up position or shift-down position to the neutral position, the shifter 52A and the shift cam 57 are disengaged and the rotational position of the shift cam 57 is held.

The rotation of the driveshaft 47 is transmitted to an axle 7a of the rear wheel 7 via the transmitting mechanism 17. The transmitting mechanism 17 includes, for example, a drive side sprocket 18A and a driven side sprocket 18B, respectively coupled to the driveshaft 47 and the axle 7a, and a chain 19 stretched between the sprockets.

The torque output by the engine 15 is transmitted from the crankshaft 23 to the clutch 45 via the reduction mechanism 16. When the clutch 45 is in the connected state, the torque of the engine 15 is transmitted to the main shaft 46 and transmitted to the driveshaft 47 after being changed in rotation speed by the transmission gears Ma, Mb, Mc, Md, Me, or Mf and Da, Db, Dc, Dd, De, or Df. The torque is then transmitted from the driveshaft 47 to the axle 7a of the rear wheel 7 via the transmitting mechanism 17.

A main shaft rotation sensor 61 and a driveshaft rotation sensor 62 are provided for respectively detecting the rotations of the main shaft 46 and the driveshaft 47. The main shaft rotation sensor 61 may be arranged to detect the rotation of any of the transmission gears Ma, Mc, Md, and Mf that are fixed to the main shaft 46 and rotate integrally with the main shaft 46. More specifically, the main shaft rotation sensor 61 may be arranged to detect the gear teeth of any of the transmission gears Ma, Mc, Md, and Mf as projections and generate a pulse signal in accordance with the gear teeth. Similarly, the driveshaft rotation sensor 62 may be arranged to detect the rotation of either of the transmission gears Db and De that are fixed to the driveshaft 47 and rotate integrally with the driveshaft 47. More specifically, the driveshaft rotation sensor 62 may be arranged to detect the gear teeth of either of the transmission gears Db and De as projections and generate a pulse signal in accordance with the gear teeth.

The output signals of the main shaft rotation sensor 61 and the driveshaft rotation sensor 62 are input into the control unit 40. The control unit 40 determines the rotational speeds of the main shaft 46 and the driveshaft 47 based on the output signals of the main shaft rotation sensor 61 and the driveshaft rotation sensor 62. The control unit 40 further computes, based on the rotational speed, the relative rotational positions (dog relative angles) of the drive dogs and the driven dogs that respectively make up the dog clutches C1 to C6.

Further, a clutch position sensor 63 is provided for detecting an actuation state of the clutch 45. The actuation state of the clutch 45 is the degree of connection of the drive side friction member 45a and the driven side friction member 45b. The clutch position sensor 63 may be a sensor that detects the position of an actuating element of the clutch actuator 51. An output signal of the clutch position sensor 63 is input into the control unit 40. The control unit 40 determines the actuation state of the clutch 45 based on the output signal of the clutch position sensor 63. Specifically, the control unit 40 determines whether the clutch 45 is in a connected state or a disconnected state. The connected state refers to a state in which the drive side friction member 45a and the driven side friction member 45b are coupled sliplessly. The disconnected state includes a completely disconnected state in which the drive side friction member 45a and the driven side friction member 45b are completely separated and the driven side friction member 45b rotates idly, and a half-clutch state in which the drive side friction member 45a and the driven side friction member 45b are in contact slippingly. In the half-clutch state, only a portion of the torque generated by the engine 15 is transmitted to the main shaft 46. The clutch 45 may also be in a state in between the half-clutch state and the completely disconnected state or a state in between the half-clutch state and the connected state.

In relation to the shift cam 57, a gear position sensor 64, which detects a rotational angle of the shift cam 57 to detect a gear position (gear stage), is provided. An output signal of the gear position sensor 64 is input into the control unit 40.

Also in relation to the crankshaft 23, an engine rotation sensor 65, which detects the rotation of the engine 15 by detecting the rotational speed of the crankshaft 23, is provided. The engine rotation sensor 65 may be a rotation sensor that detects the rotation of the first gear 41 of the reduction mechanism 16. An output signal of the engine rotation sensor 65 is input into the control unit 40. The control unit 40 computes the engine speed based on the output signal of the engine rotation sensor 65.

The control unit 40 is further provided with an output signal of a shift switch 60 provided in the handle 8 and operated by the rider. The shift switch 60 is a gear-change operating unit that includes a shift-up switch 60a and a shift-down switch 60b. The shift-up switch 60a is a switch that is operated by the rider to change the gear stage to a high speed side, and the shift-down switch 60b is a switch that is operated by the rider to change the gear stage to a low speed side. The output signal of the shift switch 60 is input as a gear-change command into the control unit 40.

Besides being issued by operation of the shift switch 60, a gear-change command is also generated automatically by the control unit 40 in accordance with a traveling state of the motorcycle 1. Specifically, the control unit 40 may have a gear-stage map that defines, for each of shift-up and shift-down, a gear stage that is in accordance with the vehicle velocity and the throttle opening degree. The control unit 40 may automatically generate the gear-change command upon reading the gear stage from the gear-stage map in accordance with the vehicle velocity and the throttle opening degree. Automatic gear-change control, by which the gear stage is changed automatically without the gear-change operation by the rider, can thereby be performed.

When a gear-change command is generated, the control unit 40 executes a gear-change operation for switching the gear stage. The gear-change operation may include a deceleration of the engine speed, an actuation of the clutch 45, and an actuation of the gear switching mechanism 50. For the gear-change operation, the control unit 40 controls the operations of the injector 31, the valve actuator 32, the clutch actuator 51, the shift actuator 52, etc., based on the output signals of the sensors 61 to 66.

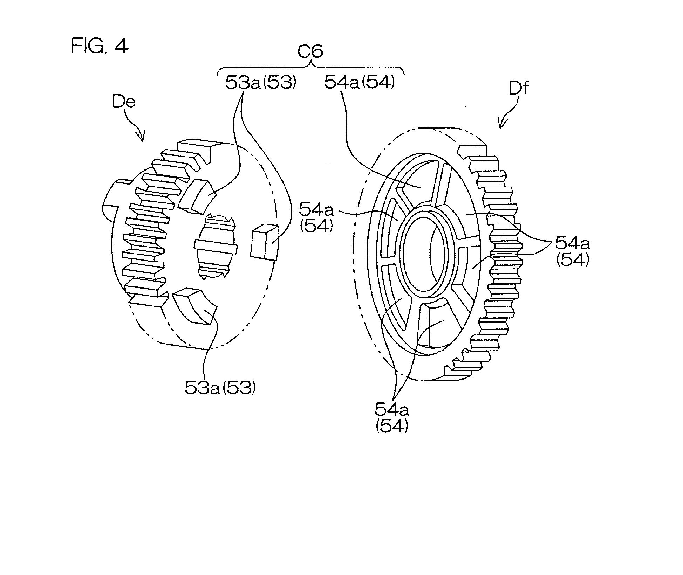

FIG. 4 is a perspective view for describing an example of an arrangement of the dog clutch C6 provided between the pair of transmission gears De and Df. One transmission gear De among the adjacently disposed transmission gears De and Df includes the dog 53 having the projections 53a. The other transmission gear Df includes the dog 54 having the recesses 54a. The dog 53 includes the plurality of projections 53a that are disposed, across intervals along the circumferential direction of the transmission gear De, on an axial end surface of the transmission gear De. The dog 54 includes the plurality of recesses 54a that are formed, across intervals along the circumferential direction of the transmission gear Df, on the axial end surface of the transmission gear Df that faces the other transmission gear De. The plurality of projections 53a and the plurality of recesses 54a have shapes, sizes, and positions that enable mutual engagement. The plurality of projections 53a are mutually equal in length in the circumferential direction, and similarly, the plurality of recesses 54a are mutually equal in length in the circumferential direction. The circumferential direction length of each recess 54a is longer than the circumferential direction length of each projection 53a, and each projection 53a thus engages with a recess 54a in a state with play. In other words, a dog relative angle at which the projections 53a and the recesses 54a can engage has a dog entry range that is in accordance with the play. The number of the projections 53a and the number of the recesses 54a may be equal or may be unequal, and an example where there are three projections 53a and six recesses 54a is shown in FIG. 4.

Of the dogs 53 and 54 that are mutually engaged, one is the drive dog that undergoes constant synchronous rotation with the main shaft 46 and the other is the driven dog that undergoes constant rotation with the driveshaft 47. In the example of FIG. 4, the transmission gear De is splined to the driveshaft 47 and therefore the dog 53 provided in the transmission gear De is the driven dog. As shown in FIG. 2 and FIG. 3, the transmission gear Df is engaged with the transmission gear Mf that is fixed to the main shaft 46 and therefore the dog 54 provided in the transmission gear Df is the drive dog.

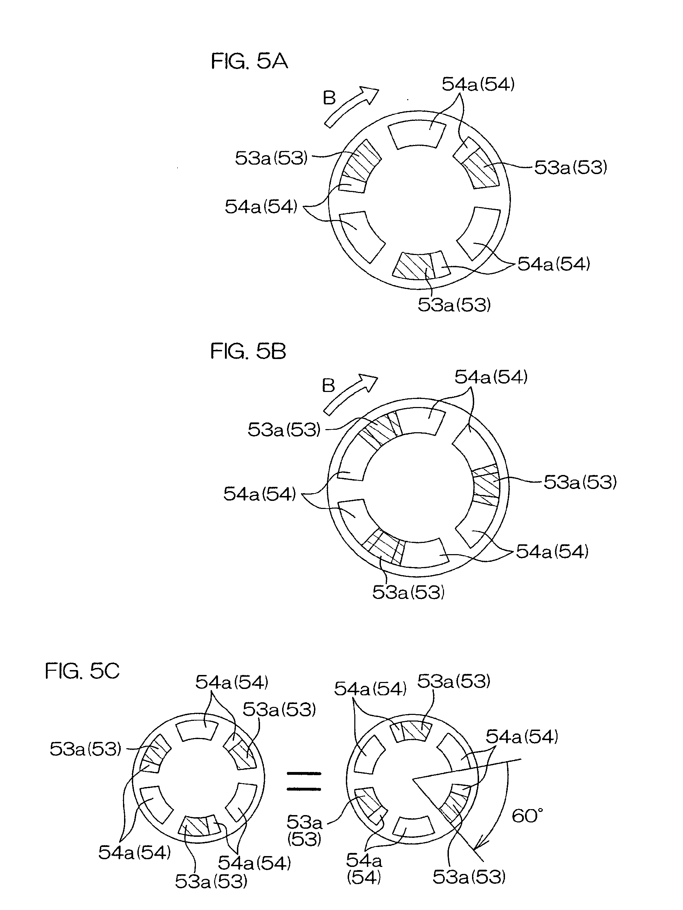

FIG. 5A to FIG. 5C are diagrams for describing a relative angle of a drive dog and a driven dog. With the example of FIG. 5A to FIG. 5C, an example where the dog 53 (indicated with hatched lines for the sake of clarity), on which the projections 53a are formed, is the drive dog and the dog 54, in which the recesses 54a are formed, is the driven dog is shown. In FIG. 5A to FIG. 5C, an arrow B indicates a rotation direction of the drive dog and the driven dog. If the projections 53a face the recesses 54a, engagement (projection-recess coupling) of the drive dog 53 and the driven dog 54 is possible (see FIG. 5A). On the other hand, if each projection 53a faces a region between a pair of mutually adjacent recesses 54a and at least a portion of each projection 53a faces a region falling outside the recesses 54a, the drive dog 53 and the driven dog 54 cannot be engaged. In this case, when the drive dog 53 and the driven dog 54 are made to approach each other, the projections 53a cannot enter the recesses 54a and a dog collision, with which the projections 53a contact the surface of the dog 54 (the axial end surface of the transmission gear), occurs (see FIG. 5B). The dog collision is resolved by the drive dog 53 and the driven dog 54 undergoing relative rotation and the projections 53a are thereby made to enter the recesses 54a so that the engaged state is attained.

During acceleration, the torque transmission from the drive dog 53 to the driven dog 54 is performed in the state in which side surfaces of the projections 53a contact surfaces at one end in the circumferential direction of the recesses 54a as shown in FIG. 5A. The relative angle (hereinafter referred to as the "dog relative angle") of the drive dog 53 and the driven dog 54 is defined with the value in this state as 0 degrees. The dog entry range is a relative angle range between the dog relative angle when the projections 53a are at one end in the circumferential direction of the recesses 54a and the dog relative angle when the projections 53a are at the other end in the circumferential direction of the recesses 54a. That is, if the drive dog and the driven dog face each other at a dog relative angle within the dog entry range, the drive dog and the driven dog can be engaged to put the dog clutch in the engaged state.

The projections 53a as well as the recesses 54a of the dogs are respectively provided at equal intervals in the rotation direction and are equal in length in the rotation direction and, therefore for example, the states of the right diagram and the left diagram of FIG. 5C are equivalent. The dog relative angle is thus determined with a dog geometry cycle angles of the projections 53a and the recesses 54a as the upper limit. The dog geometry cycle angle is defined as: dog geometry cycle angle=360 degrees/k when relative position ranges in which the drive dog and the driven dog are engageable are in a k-fold symmetry (where k is a natural number not less than 2) configuration centered at the center of rotation of the dogs. For example, a case where the drive dog has three equivalent projections 53a disposed at equal intervals around the center of rotation and the driven dog has six equivalent recesses 54a disposed at equal intervals around the center of rotation, as shown in FIG. 5C shall now be considered. In this case, each projection 53a of the drive dog is engageable with any one of the six recesses 54a of the driven dog and therefore the relative position ranges in which the drive dog and the driven dog are engageable are in a six-fold symmetry configuration. The dog geometry cycle angles of the drive dog and the driven dog are thus both 60 degrees (=360 degrees/6).

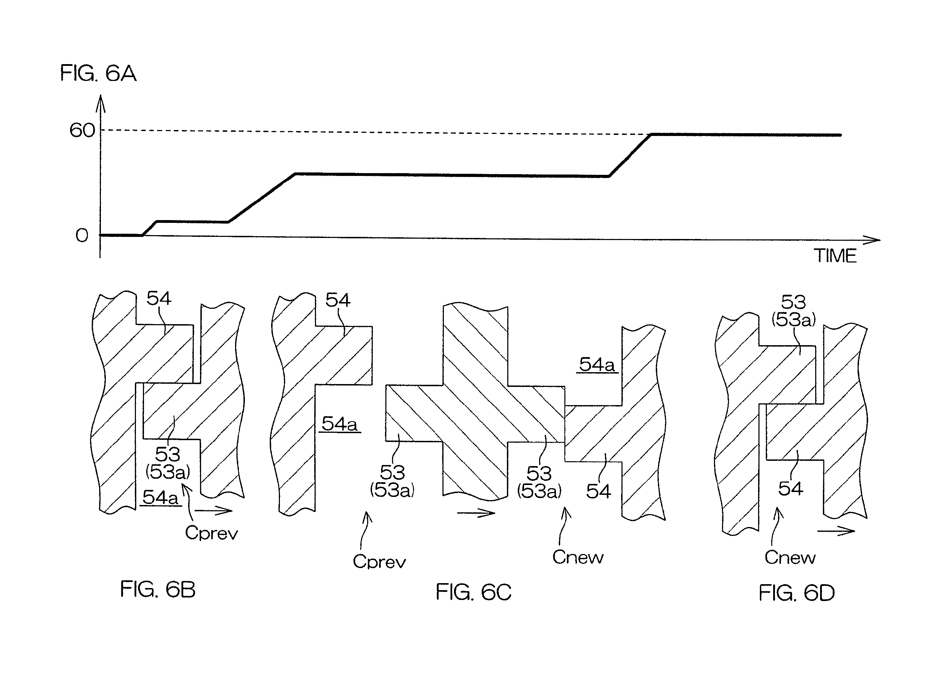

FIG. 6A to FIG. 6D are explanatory diagrams illustrating operations of the dog clutch during gear-change. FIG. 6A shows a change with time of the rotational angle of the shift cam 57. FIG. 6B shows a state in which a dog is about to be extracted from a state in which the dogs are engaged (dog extraction). FIG. 6C shows a state in which the dogs contact each other before engagement (dog collision). FIG. 6D shows a state in which the dogs are engaged (dog entry).

By the shift cam 57 rotating by a fixed angle (60 degrees in the present preferred embodiment), the dog clutch Cprev of a previous gear stage (old gear stage) is disengaged and another dog clutch Cnew corresponding to a newly selected gear stage (new gear stage) is guided to the engaged state. That is, at the dog clutch Cprev of the old gear stage, the dog 53 engaged with the dog 54 is extracted (the dog extraction shown in FIG. 6B) and the dogs 53 and 54 are engaged at the dog clutch Cnew of the new gear stage (the dog entry shown in FIG. 6D). If the dog relative angle is not within the dog entry range, a dog collision occurs before the engagement of the dogs 53 and 54 (see FIG. 6C). While the dog collision is occurring, the rotational angle of the shift cam 57 does not change. When the dog collision is resolved by the relative rotation of the drive dog and the driven dog, the projections 53a enter the recesses 54a and the shift cam 57 rotates accordingly.

Until the engagement of the dog clutch Cnew of the new gear stage is completed upon disengagement of the dog clutch Cprev of the old gear stage, the clutch 45 is put in the disconnected state and the torque of the engine 15 is not transmitted to the rear wheel 7, which is the drive wheel, or is suppressed. Therefore when the duration of the dog collision becomes long, the time during which a sufficient driving force cannot be obtained becomes long and the riding feeling thus becomes poor.

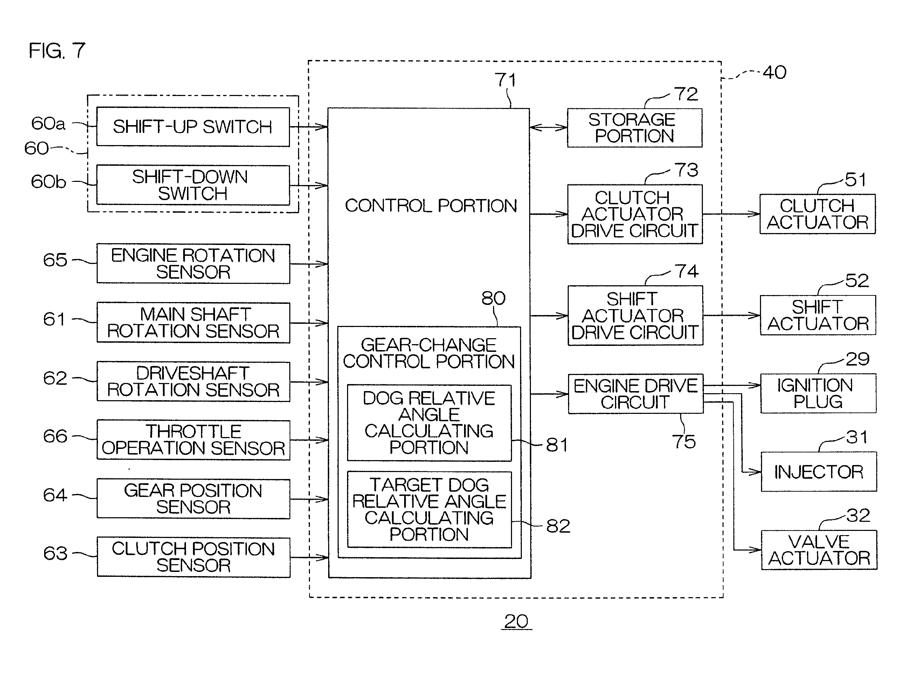

FIG. 7 is a block diagram for describing an electrical arrangement related to the automatic transmission 20. The output signals from the shift switch 60, the main shaft rotation sensor 61, the driveshaft rotation sensor 62, the clutch position sensor 63, the gear position sensor 64, the engine rotation sensor 65, and the throttle operation sensor 66 are input into the control unit 40. The clutch actuator 51, the shift actuator 52, the ignition plug 29, the injector 31, and the valve actuator 32 are connected to the control unit 40, and the operations of these components are controlled by the control unit 40.

The control unit 40 includes a control portion 71, a storage portion 72, a clutch actuator drive circuit 73, a shift actuator drive circuit 74, and an engine drive circuit 75. The clutch actuator drive circuit 73 and the shift actuator drive circuit 74 respectively supply electric power for driving the clutch actuator 51 and the shift actuator 52. The engine drive circuit 75 controls the operations of the ignition plug 29, the injector 31, and the valve actuator 32.

The control portion 71 controls the clutch actuator drive circuit 73, the shift actuator drive circuit 74, and the engine drive circuit 75 based on the output signals of the shift switch 60 and the sensors 61 to 66. The control portion 71 thereby controls the operations of the clutch actuator 51, the shift actuator 52, the ignition plug 29, the injector 31, and the valve actuator 32. An operation program of the control portion 71 is stored in the storage portion 72.

The control portion 71 executes the control program stored in the storage portion 72 to act as a plurality of function processing portions. The function processing portions include a gear-change control portion 80 for controlling the gear-change operation. The gear-change control portion 80 has a dog relative angle calculating portion 81 that calculates the relative angles of the drive dogs and the driven dogs of all of the dog clutches C1 to C6 provided in the automatic transmission 20. The gear-change control portion 80 further includes a target dog relative angle calculating portion 82 that calculates a target dog relative angle that is the dog relative angle for determining the timing at which the gear-change operation is to be started when a gear-change command is issued. The target dog relative angle calculating portion 82 calculates the target dog relative angle based on the dog relative angle calculated by the dog relative angle calculating portion 81. The gear-change control portion 80 starts the gear-change operation at a timing at which the dog relative angle becomes equal to the target dog relative angle after receiving the gear-change command.

The dog relative angle calculating portion 81 determines the rotational speeds of the main shaft 46 and the driveshaft 47 based on the output signals of the main shaft rotation sensor 61 and the driveshaft rotation sensor 62. Further, the dog relative angle calculating portion 81 determines the rotational speeds of all of the transmission gears Ma, Mb, Mc, Md, Me, Mf; Da, Db, Dc, Dd, De, and Df based on the rotational speeds of the main shaft 46 and the driveshaft 47. The rotational speeds of the drive dogs and the driven dogs of all of the dog clutches C1 to C6 are thereby determined. For each of the dog clutches C1 to C6, the dog relative angle calculating portion 81 determines a speed difference of the drive dog rotational speed and the driven dog rotational speed and integrates the speed difference to constantly calculate the dog relative angle.

An example of a specific method for calculating the dog relative angle is as follows.

(1) Initialization of the dog relative angle

In an initial state immediately after a main switch of the motorcycle 1 is turned on and electric power is supplied to the control unit 40, the computed value (initial value) of the dog relative angle is 0. However actually, the relative angle of a drive dog and a driven dog may take on a value other than 0. When the motorcycle 1 is accelerating with any of the dog clutches being in the engaged state, each projection 53a of the dog in the dog clutch in the engaged state is at the position closest toward the acceleration side of the engaged recess 54a and contacts the end portion of the recess 54a. That is, the drive dog and the driven dog are in the state in which the relative angle is 0. In this state, the dog relative angle of the dog clutch is initialized to zero. The dog relative angles of all dog clutches can be initialized by the dog clutches of all gear stages being put in the engaged state and the accelerating state being attained at each gear stage. The motorcycle 1 is ordinarily accelerated while being shifted up successively after starting and the dog relative angles of all dog clutches are thus initialized promptly after starting.

(2) Computation of the drive dog rotational speed and the driven dog rotational speed

All drive dog rotational speeds are computed from the output of the main shaft rotation sensor 61. All driven dog rotational speeds are computed from the driveshaft rotational speed obtained by the output of the driveshaft rotation sensor 62.

(3) Computation of the dog relative angle

The dog relative speed is determined by subtracting the driven dog rotational speed from the drive dog rotational speed. The dog relative speed is multiplied by a computation cycle and the computation result is added to a previous value of the dog relative angle. By the dog relative speed thereby being integrated, the dog relative angle is determined. The same computation is performed for all dog clutches to determine the dog relative angles.

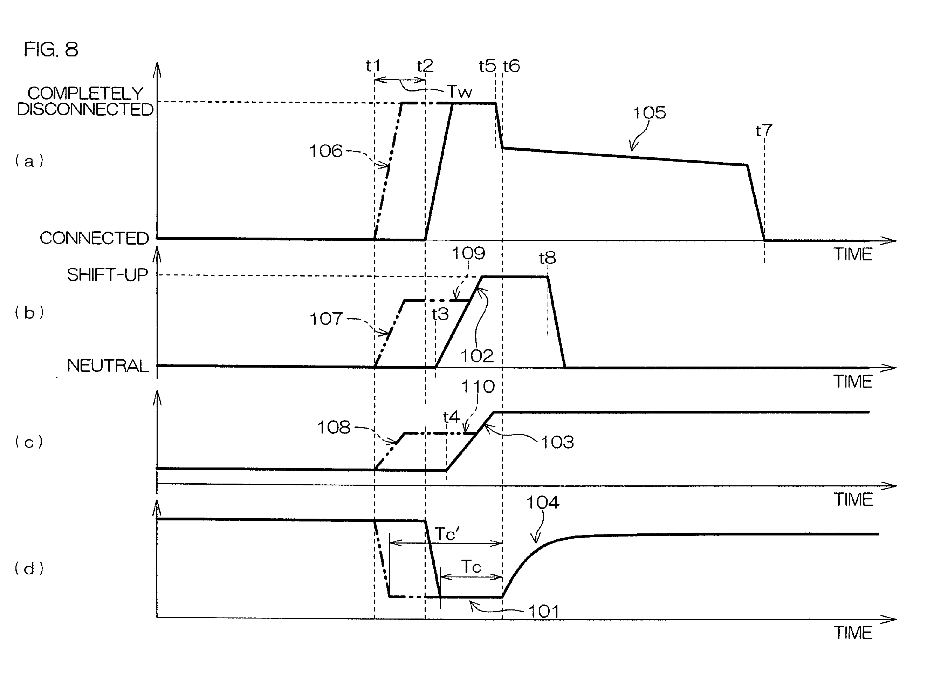

FIG. 8 is a time chart for describing an example of the gear-change operation in the present preferred embodiment. FIG.8 (a) shows the position of the clutch 45, FIG. 8(b) shows the position of the shifter 52A that rotates the shift cam 57, FIG. 8(c) shows the angle of the shift cam 57, and FIG. 8(d) shows the change with time of the driving force transmitted to the rear wheel 7. The shift actuator 52 drives the shifter 52A to rotate the shift cam 57 by a fixed angle (for example, 60 degrees) and thereby disengages the dog clutch of the current shift stage and engages the dog clutch of the next shift stage.

Upon issuing of a gear-change command at a time t1, the clutch 45 is disconnected at a time t2 after a waiting time Tw for timing adjustment. That is, the clutch 45 undergoes a state transition from the connected state to the disconnected state. The driving force transmitted to the rear wheel 7 is thereby weakened and when the clutch 45 reaches the completely disconnected state, the driving force is no longer transmitted to the rear wheel 7 and the rear wheel 7 enters an inertial rotation state as indicated by a reference symbol 101. The timing (time t1) at which the clutch 45 starts the state transition from the connected state to the disconnected state is, specifically, the timing at which the drive side friction member 45a and the driven side friction member 45b of the clutch 45 begin to slip.

After the actuation of the clutch 45 is started, the shift actuator 52 is driven at a time t3 and by the shifter 52A thereby being actuated at a time t4, the switching of the dog clutch is started. That is, at the dog clutch of the current gear stage, the dog having the projections and the dog having the recesses separate and the dog extraction operation of extracting the projections from the recesses is thereby started. After completion of the dog extraction operation, the dog entry operation is performed at the dog clutch corresponding to the newly selected gear stage. That is, the dog having the projections and the dog having the recesses approach each other and the projections are inserted into the recesses so that the dogs become mutually engaged. The dog extraction operation may be enabled even when the clutch 45 is not in the completely disconnected state and therefore the driving of the shift actuator 52 may be started without waiting for the clutch 45 to be put in the completely disconnected state.

The waiting time Tw, from the gear-change command reception time t1 to the starting of the gear-change operation, that is, to the time t2 of start of actuation by the clutch actuator 51 in the present preferred embodiment, is adjusted to a time such that a dog collision will not occur at the dog clutch to be engaged in accordance with the new gear stage. When the actuation by the shift actuator 52 is thereby started, the operations from dog extraction to dog entry proceed smoothly without occurrence of dog collision as indicated by reference symbols 102 and 103. When the angle of the shift cam 57 reaches a dog entry completion angle, the clutch actuator 51 is made to actuate at a time t5 and the clutch 45 is controlled to be in the half-clutch state, in which the drive side friction member 45a and the driven side friction member 45b are coupled while slipping mutually, at a time t6. Driving force transmission to the rear wheel 7 is thereby recovered as indicated by a reference symbol 104 and the rear wheel 7 is returned to the state of being driven by the torque generated by the engine 15.

After passage of a half-clutch period indicated by a reference symbol 105, the clutch actuator 51 is controlled further so that at a time t7, the drive side friction member 45a and the driven side friction member 45b become coupled completely and enter the connected state without slippage between the members.

After a predetermined time after the completion of dog entry, the shift actuator 52 actuates the shifter 52A in a direction of returning to the neutral position at a time t8. The shifter 52A is thereby returned to the neutral position.

By thus adjusting the waiting time Tw, from the gear-change command time t1 to the gear-change operation starting time t2, so that a dog collision will not occur, a drive cutoff time Tc, during which the driving force is not transmitted to the rear wheel 7, can be shortened. A smooth gear-change operation is thereby made possible and the riding feeling of the motorcycle 1 can thus be improved.

Operations related to a comparative example, in which the gear-change operation is started immediately after the gear-change command is received, are indicated by alternate long and two short dashed lines in FIG. 8. In this case, when the gear-change command is received, the clutch actuator 51 actuates immediately and the driving force of the rear wheel 7 is lost as indicated by a reference symbol 106. The shift actuator 52 then actuates without timing adjustment as indicated by reference symbols 107 and 108. Therefore, while the shifter 52A is actuated and drives the shift cam 57, a dog collision occurs at the dog clutch corresponding to the selected gear stage after the dog extraction operation as indicated by reference symbols 109 and 110. After the dog collision is resolved by the relative rotation of the drive dog and the driven dog, the shifter 52A moves further and arrives at the shift-up position (or the shift-down position), the shift cam 57 rotates accordingly so that dog entry occurs, and the dog clutch is put in the engaged state. The longer the time for which the dog collision is sustained, a drive cutoff time Tc' during which the driving force of the rear wheel 7 is lost thus becomes longer, and the riding feeling is made poor accordingly.

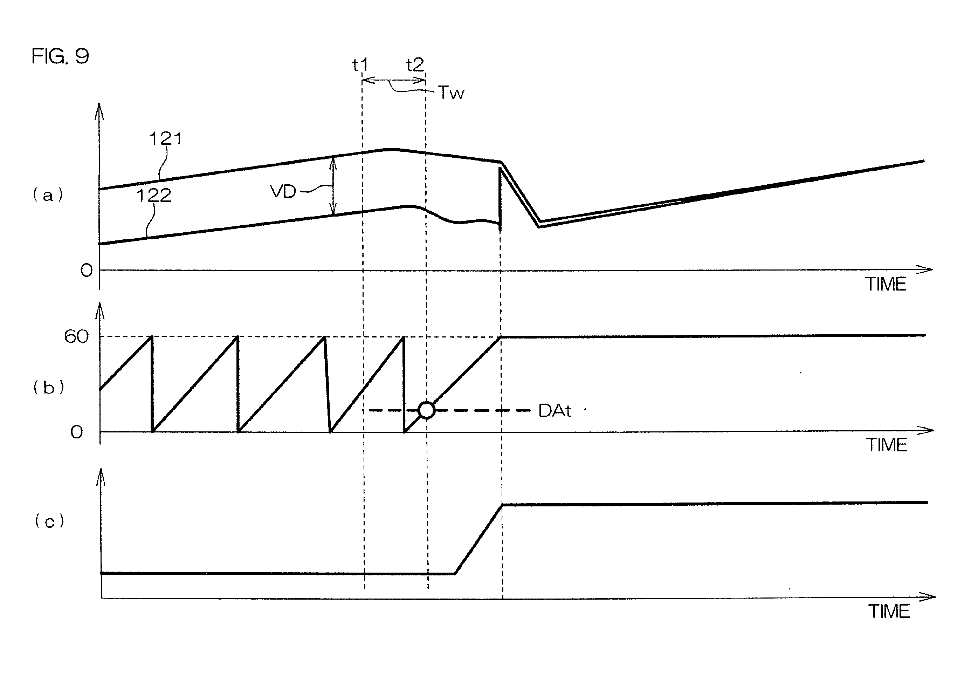

FIG. 9 is a time chart for describing a method for adjusting the waiting time from the receiving of the gear-change command to the starting of the gear-change operation, that is, a method for adjusting the gear-change operation starting timing. Curves 121 and 122 in FIG. 9(a) respectively show changes with time of the drive dog rotational speed and the driven dog rotational speed of a dog clutch. FIG. 9(b) shows a change with time of the relative angle (dog relative angle) of the drive dog and the driven dog. FIG. 9(c) shows a change with time of the shift cam angle.

The control unit 40 constantly calculates the drive dog rotational speed and the driven dog rotational speed of each dog clutch and constantly integrates the dog relative speed VD, which is the difference of the rotational speeds, to constantly calculate the dog relative angle. For example, when the drive dog includes three projections 53a at equal intervals in the rotation direction and the driven dog includes six recesses 54a at equal intervals in the rotation direction, the dog geometry cycle angles are 60 degrees. In this case, the dog relative angle of the drive dog and the driven dog varies from 0 degrees to 60 degrees.

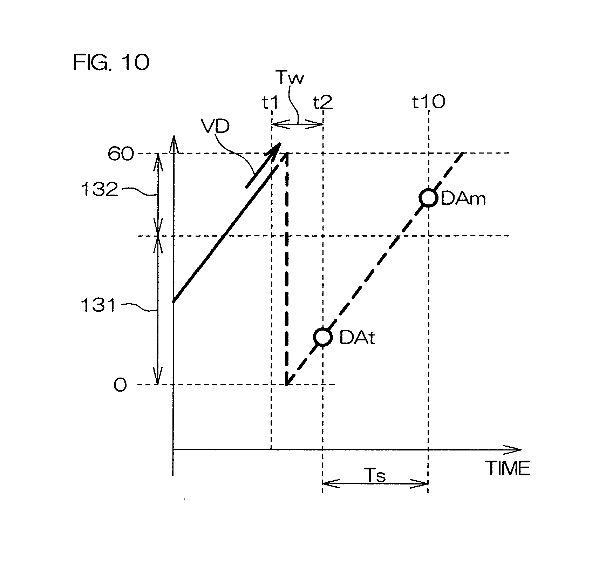

As shown in FIG. 10 in which the change with time of the dog relative angle is magnified, a dog collision range 131, in which a dog collision occurs, and a dog entry range 132, in which dog entry is enabled, are present in the entire dog relative angle range from 0 degrees to 60 degrees. If the dog entry operation is performed when the dog relative angle is in the dog entry range 132, the dog clutch can be put in the engaged state without occurrence of a dog collision. The control unit 40 thus computes a target dog relative angle DAt at which the gear-change operation should be started so that the dog entry operation occurs, for example, at the dog relative angle of a median value DAm of the dog entry range 132.

Specifically, after receiving the gear-change command at the time t1, the control unit 40 predicts the change of the dog relative angle under the assumption that a previous dog relative speed VD is maintained. The predicted change of the dog relative angle is indicated by broken lines in FIG. 10. The control unit 40 then predicts an earliest time t10 at which the dog relative angle reaches the median value DAm of the dog entry range 132 after the gear-change command reception time t1. The control unit 40 determines, as the target dog relative angle DAt, a dog relative angle prediction value at the time t2 that precedes the predicted time t10 by a gear-change required time Ts.

The gear-change required time Ts is the required time until dog entry occurs from the start of the gear-change operation and, for example in the present preferred embodiment, is the time until dog entry occurs from the start of the disconnection operation of the clutch 45. In the present preferred embodiment, the timing at which dog entry occurs is the timing at which the projections 53a start entering the recesses 54a. The gear-change required time Ts may be a fixed value or may be read from a map in which different values are set according to the gear stage, etc. An arrangement where the gear-change required time Ts is computed by learning is also possible.

Upon receiving the gear-change command, the control unit 40 computes the target dog relative angle DAt and monitors the dog relative angle. At the time t2 at which the dog relative angle reaches the target dog relative angle DAt, the control unit 40 makes the clutch actuator 51 actuate. The gear-change operation sequence is thereby started and the engagement of the dog clutch corresponding to the newly selected gear stage occurs at a timing such that a dog collision will not occur.

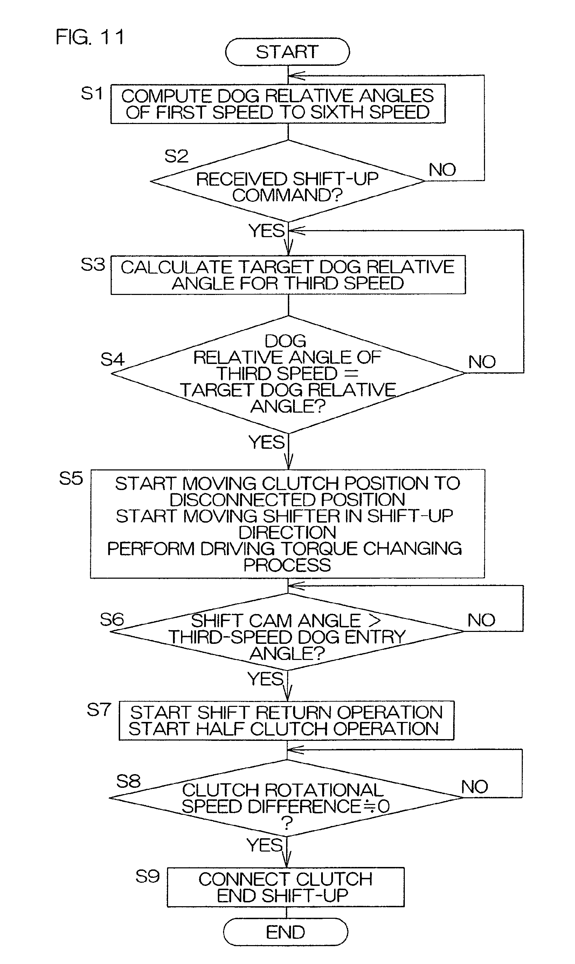

FIG. 11 is a flowchart for describing the gear-change operation. A control operation example of shifting up from second speed gear stage to third speed gear stage is shown in FIG. 11. This control operation is mainly performed by actions of the gear-change control portion 80 of the control unit 40.

The control unit 40 constantly computes the dog relative angles of drive dogs and driven dogs of the dog clutches corresponding to the first speed gear stage to the sixth speed gear stage (step S1; function of the dog relative angle calculating portion 81). When a shift-up command (gear-change command) is received in the state in which the dog clutch for the second speed gear stage is engaged (step S2), the control unit 40 references the dog relative angle of the dog clutch corresponding to the third speed gear stage and further uses the dog relative speed of that dog clutch to calculate the target dog relative angle (step S3; function of the target dog relative angle calculating portion 82). Thereafter, the control unit 40 waits for the dog relative angle to reach the target dog relative angle (step S4) and then executes the gear-change operation (step S5).

In the present preferred embodiment, the gear-change operation includes the disconnection of the clutch 45, the actuation of the gear switching mechanism 50, and an output changing process of the engine 15. When the gear-change operation is started, these operations are executed in an order and at timings that are determined in advance. The order and timings of the operations are set appropriately in accordance with the arrangement, etc., of the automatic transmission 20. If the disconnection of the clutch 45 is the first operation, the starting timing of the gear-change operation is the actuation timing of the clutch actuator 51. If the actuation of the gear switching mechanism 50 is the first operation, the starting timing of the gear-change operation is the actuation timing of the shift actuator 52. Also, if the output changing process is the first operation, the starting timing of the gear-change operation is the timing of starting the changing of the output of the engine 15 by controlling at least one component among the ignition plug 29, the injector 31, and the valve actuator 32. Regardless of which operation is the first operation, the timings of the respective operations are adjusted by adjusting the gear-change operation starting timing. The output changing operation may specifically be performed by performing one or more among the control of the ignition timing of the ignition plug 29, control of the fuel injection amount of the injector 31, and opening degree control of the throttle valve 30 (control of the intake air amount). The output changing process is, specifically, a process for reducing the frictional force between dogs to facilitate dog extraction. For example, it may be a process of decreasing the engine output when shifting up and increasing the engine output when shifting down.

For the gear-change operation, the control unit 40 makes the clutch actuator 51 actuate and start actuating the clutch 45 from the connected position toward the disconnected position. Further, the control unit 40 makes the shift actuator 52 actuate to thereby actuate the shifter 52A in the shift-up direction. Also, the control unit 40 executes the output changing process for changing (decreasing) the output of the engine 15.

When the gear-change operation is thus started, the control unit 40 references the output of the gear position sensor 64 and judges whether or not the angle of the gear cam 57 has exceeded the dog entry angle of the dog clutch for the third speed gear stage (step S6). If an affirmative judgment is made here, this means that the dog clutch for the third speed gear stage is engaged and the control unit 40 thus controls the shift actuator 52 to perform a shift return operation of returning the shifter 52A to the neutral position (step S7). Also, the control unit 40 controls the clutch actuator 51 to guide the clutch 45 to the half clutch state (step S7).

Waiting is then performed until the rotational speed difference of the drive side friction member 45a and the driven side friction member 45b of the clutch 45 becomes substantially zero (step S8), and then the control unit 40 further controls the clutch actuator 51 and guides the clutch 45 to the completely connected position (step S9). The shift-up operation is thereby completed.

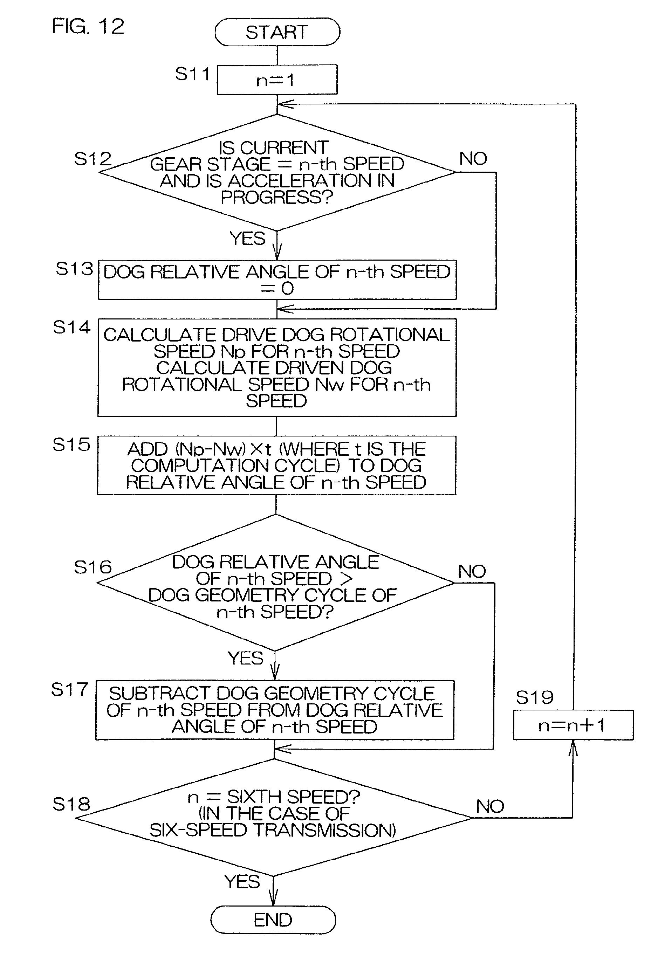

FIG. 12 is a flowchart for describing a process for calculating the dog relative angles of the drive dogs and the driven dogs of the respective dog clutches. This control operation is mainly performed by actions of the gear-change control portion 80 (especially the dog relative angle calculating portion 81) of the control unit 40.

After an initial value of 1 is set in the number n of the gear stage subject to calculation (step S11), it is judged whether or not the currently selected gear stage is the n-th speed gear stage and acceleration is in progress (step S12). If an affirmative judgment is made here, the control unit 40 resets the dog relative angle of the n-th speed gear stage to 0.

Thereafter, the control unit 40 calculates a drive dog rotational speed Np and a driven dog rotational speed Nw of the dog clutch of the n-th speed gear stage (step S14). The control unit 40 then adds (Np-Nw)xt (where t is the computation cycle) to the current value of the dog relative angle of the dog clutch of the n-th speed gear stage (step S15).

The control unit 40 then judges whether or not the dog relative angle of the dog clutch of the n-th speed gear stage exceeds the dog geometry cycle of the dog clutch (step S16). If an affirmative judgment is made here, the control unit 40 subtracts the dog geometry cycle of the dog clutch of the n-th speed gear stage from the dog relative angle of the dog clutch (step S17). The dog relative angle of the dog clutch of the n-th speed gear stage is thereby continuously computed to be within the range of the dog geometry cycle of the dog clutch. If the dog relative angle of the dog clutch of the n-th speed gear stage does not exceed the dog geometry cycle (step S16: NO), the process of step S17 is skipped. The control unit 40 ends the process if the gear stage n subject to computation is the highest gear stage (for example, the sixth speed) (step S18) or otherwise increments n by +1 (step S19) and then repeats the process from step S12.

The relative angles of the drive dogs and the driven dogs of all dog clutches of the first speed gear stage to the sixth speed gear stage are thus calculated. This process is repeatedly executed at every computation cycle t and the dog relative angles of the dog clutches of the first speed gear stage to the sixth speed gear stage are thereby computed constantly while the main switch is made conductive and electric power is being supplied to the control unit 40.

As described above, with the present preferred embodiment, the automatic transmission 20 is arranged to change the rotation speed of the main shaft 46, to which the torque from the engine 15 as the power source is transmitted, and transmit the rotation changed in rotation speed to the driveshaft 47. The automatic transmission 20 includes the drive dogs provided on the main shaft 46 or on the driveshaft 47 so as to be in constant synchronous rotation with the main shaft 46 and the driven dogs provided on the main shaft 46 or on the driveshaft 47 so as to be in constant synchronous rotation with the driveshaft 47. The automatic transmission 20 further includes the gear switching mechanism 50 causing a drive dog and a driven dog to approach and separate from each other to engage and disengage the drive dog and the driven dog to switch the gears transmitting the driving force between the main shaft 46 and the driveshaft 47. Further, the automatic transmission 20 includes the shift actuator 25, which actuates the gear switching mechanism 50, the clutch 45, and the gear-change control portion 80. The clutch 45 is switched between the connected state, in which the torque is transmitted sliplessly from the engine 15 to the main shaft 46, and the disconnected state, in which a portion of the torque is slippingly transmitted from the engine 15 to the main shaft 46 or in which the torque transmission from the engine 15 to the main shaft 46 is disconnected. Based on the relative rotational position of the drive dog and the driven dog to be engaged, the gear-change control portion 80 controls the gear-change operation, including the dog engaging operation of making the shift actuator 52 actuate to engage the drive dog and the driven dog.

With this arrangement, the torque from the engine 15 is transmitted to the main shaft 46 via the clutch 45, and then changed in rotational speed and transmitted to the driveshaft 47. The torque is transmitted from the engine 15 to the main shaft 46 when the clutch 45 is in the connected state or in the disconnected state of transmitting a portion of the torque. Dog clutches C1 to C6, each made up of a combination of a drive dog that is in constant synchronous rotation with the main shaft 46 and a driven dog that is in constant synchronous rotation with the driveshaft 47, are provided on the main shaft 46 or on the driveshaft 47. By making the drive dog and the driven dog in any one of the dog clutches C1 to C6 engage, rotation is transmitted from the main shaft 46 to the driveshaft 47 at the gear ratio corresponding to the dog clutch in the engaged state. The engagement and disengagement of the drive dog and the driven dog are performed by the gear switching mechanism 50 that makes the dogs approach and separate from each other. The gear switching mechanism 50 is actuated by the shift actuator 52. The gear-change control portion 80 controls the gear-change operation based on the relative rotational position of the drive dog and the driven dog to be engaged. The gear-change operation includes the dog engaging operation of making the shift actuator 52 actuate to engage the drive dog and the driven dog. By the gear-change operation being controlled based on the relative rotational position of the drive dog and the driven dog, a dog collision can be avoided or the dog collision time can be shortened or control that is in accordance with the circumstances of the dog collision can be performed. Influences due to the dog collision, especially an uncomfortable feeling felt by a user can thereby be reduced.

In the present preferred embodiment, the gear-change operation includes the clutch disconnecting operation of making the clutch actuator 51 actuate to disconnect the clutch 45, the dog engaging operation of actuating the shift actuator 52 to engage a drive dog and a driven dog, and the output changing process of the changing the output of the engine 15. The gear-change control portion 80 controls the gear-change operation based on the relative rotational position of the drive dog and the driven dog and thereby completes the gear-change operation while avoiding a dog collision. The influences due to the dog collision, especially the uncomfortable feeling felt by the user can thereby be reduced. Also, by performing the gear-change operation in the state in which the output of the engine 15 is changed, the frictional resistance between the dogs can be reduced during dog extraction.

The gear-change control portion 80 sets the timing for starting the gear-change operation based on the dog relative angle. When, in the sequence of operations making up the gear-change operation, the clutch 45 is actuated first, the actuation timing of the clutch actuator 51 is set. Or, when the operation of the gear switching mechanism 50 is performed earliest, the actuation timing of the shift actuator 52 is set. Or, if the output changing process of the engine 15 is performed earliest, the starting timing of the output changing process is set. By setting the starting timing of the first operation in the sequence of operations making up the gear-change operation, the timings of the other operations making up the gear-change operation are also adjusted indirectly.

By such control of the starting timing of the gear-change operation, the drive dog and the driven dog are put in the engaged state without occurrence of a dog collision. The time from the disengagement (dog extraction) of the drive dog and the driven dog, corresponding to the gear stage before the gear-change, to the engagement (dog entry) of the drive dog and the driven dog, corresponding to the gear stage after the gear-change, can thereby be shortened and the time during which the driving force is not transmitted to the rear wheel 7 can thus be shortened. The influences due to the dog collision, especially the uncomfortable feeling felt by the user can thereby be reduced, and the motorcycle 1 with a good feeling during shifting can be provided.

Also, with the present preferred embodiment, the rotations of the main shaft 6 and the driveshaft 47 are respectively detected by the main shaft rotation sensor 61 and the driveshaft rotation sensor 62 and the dog relative angles of all of the dog clutches C1 to C6 are determined using the output signals of these sensors. The dog relative angles can thus be determined accurately to enable the starting timing of the gear-change operation to be set appropriately to reliably avoid a dog collision and shorten the drive cutoff time.

Especially in the present preferred embodiment, the main shaft rotation sensor 61 and the driveshaft rotation sensor 62 are arranged to detect the gear teeth of the transmission gears as projections so that the rotational angles or the rotational speeds of the main shaft 46 and the driveshaft 47 can be detected accurately. The dog relative angles can thereby be detected more accurately to enable the starting timing of the gear-change operation to be set more appropriately and enable the influences of the dog collision, especially the uncomfortable feeling felt by the user to be reduced more effectively.

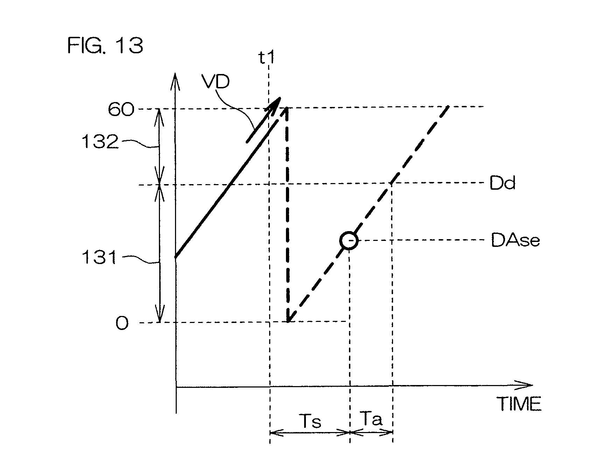

FIG. 13 is a diagram for describing a second preferred embodiment of the present invention and shows a change with time of the dog relative angle. In the first preferred embodiment described above, the dog collision is avoided by adjusting the waiting time to the start of the gear-change operation after the receiving of a gear-change command. On the other hand, the second preferred embodiment is arranged such that upon receiving a gear-change command, the gear-change operation is started immediately, a dog collision duration is predicted, and the gear-change operation is controlled based on the prediction result of the dog collision duration. The dog collision duration is the time for which the dog collision continues at the dog clutch corresponding to the newly selected gear stage.

A description shall be provided below with reference to FIG. 1 to FIG. 7, FIG. 11, etc., as well. However, in the present preferred embodiment, the gear-change control portion 80 (see FIG. 7) is not required to have the target dog relative angle calculating portion 82.

Upon receiving a gear-change command at the time t1, the control unit 40 starts the gear-change operation, and computes the dog collision duration Ta in accordance with the time required for the gear-change operation, that is, the gear-change required time Ts. More specifically, the control unit 40 assumes that the dog relative speed VD is maintained at the value of the gear-change command reception time t1 and predicts the dog relative angle (gear-change end dog relative angle) DAse after the gear-change required time Ts. If the gear-change end dog relative angle DAse belongs in the dog collision range 131, the control unit 40 computes the time required to reach a dog collision resolution angle Dd from the dog relative angle DAse as the dog collision duration Ta. The dog collision resolution angle Dd is a lower limit value of the dog relative angle in the dog entry range 132. The dog collision duration Ta can specifically be determined by the following formula.

Dog collision duration = (Dog collision resolution angle -- Shift end dog relative angle) / Dog relative speed

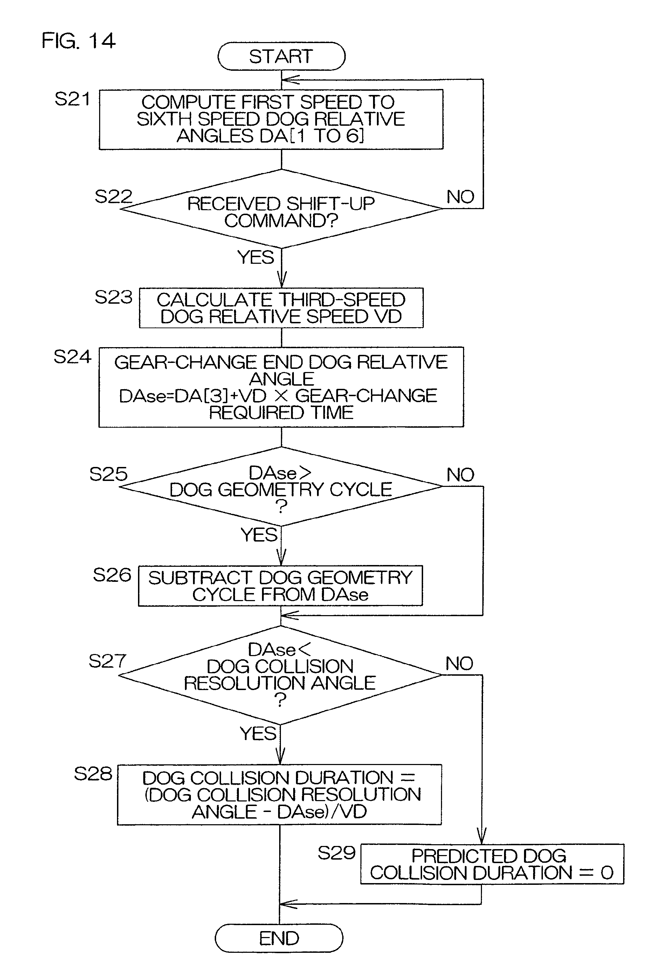

FIG. 14 is a flowchart for describing a dog collision duration prediction process. An example of performing prediction computation of the dog collision duration when shifting up from the second speed gear stage to the third speed gear stage is shown in FIG. 14. This control operation is mainly performed by actions of the gear-change control portion 80 of the control unit 40.

The control unit 40 constantly computes the dog relative angles DA[1] to DA[6] at the dog clutches respectively corresponding to the gear stages of the first speed to the sixth speed (step S21; function of the dog relative angle calculating portion). An example of computation of the dog relative angles is as shown in FIG. 11 mentioned above.

Upon receiving a shift-up command (step S22), the control unit 40 calculates the dog relative speed VD at the dog clutch of the third-speed gear stage, which is the newly selected gear stage (step S23). The control unit 40 further adds the "dog relative speed VD $\times$ shift required time" to the dog relative angle DA[3] at the dog clutch of the third-speed gear stage to determine the gear-change end dog relative angle DAse (=DA[3]+VD $\times$ shift required time) (step S24). The control unit 40 then judges whether or not the gear-change end dog relative angle DAse is greater than the dog geometry cycle (step S25). If the gear-change end dog relative angle DAse is greater than the dog geometry cycle (step S25: YES), the control unit 40 assigns the value, obtained by subtracting the dog geometry cycle from the shift end dog relative angle DAse, to the shift end dog relative angle DAse (step S26). If the gear-change end dog relative angle DAse is not more than the dog geometry cycle (step S25: NO), the process of step S26 is skipped.

Thereafter, the control unit 40 compares the gear-change end dog relative angle DAse and the dog collision resolution angle (step S27). If the gear-change end dog relative angle DAse is less than the dog collision resolution angle (step S27: YES), this means that a dog collision will occur and the control unit 40 thus predicts the dog collision duration (step S28). Specifically, the control unit 40 divides a value, obtained by subtracting the gear-change end dog relative angle DAse from the dog collision resolution angle, by the dog relative speed VD. The dog collision duration (=(dog collision resolution angle - DAse)/VD) is thereby determined. If the gear-change end dog relative angle DAse is not less than the dog collision resolution angle (step S27: NO), a dog collision will not occur and the control unit 40 thus predicts the dog collision duration to be 0 (step S29) and ends the computation. In this case, the control unit 40 predicts that a dog collision will not occur.

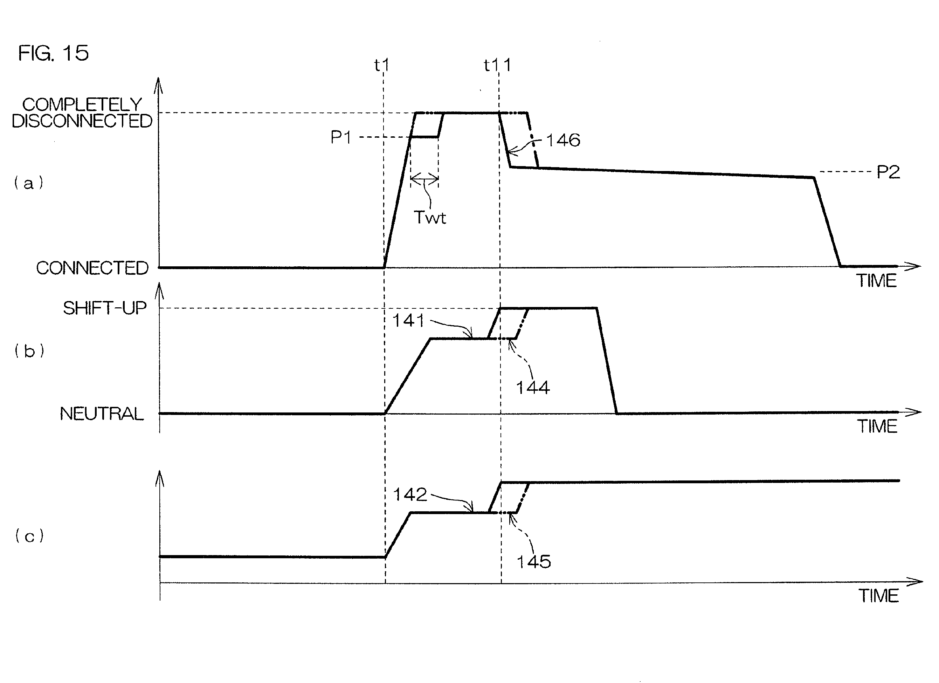

FIG. 15 is a time chart for describing an example of a control operation that is in accordance with the predicted dog collision duration. More specifically, FIG. 15(a) shows a change with time of the position of the clutch 45, FIG. 15(b) shows a change with time of the position of the shifter 52A, and FIG. 15(c) shows a change with time of the angle of the shift cam 57.

When a gear-change command is issued at the time t1, the control unit 40 immediately starts the gear-change operation in response thereto. With the example shown in FIG. 15, the gear-change operation begins with the state transition of the clutch 45. That is, the clutch 45 starts to undergo the state transition from the connected state to the disconnected state. At a slightly delayed point or at the same time, the shift actuator 52 is driven, the shifter 52A is actuated, and variation of the shift cam angle starts. If a dog collision occurs, the shifter 52A cannot be displaced to the operation completion position (the shift-up position or the shift-down position) and the movement thereof is restricted in the middle as indicated by a reference symbol 141. Accordingly, the shift cam angle also cannot reach the angle of the gear position of the next gear stage and stops varying in the middle as indicated by a reference symbol 142.

On the other hand, the clutch 45 is not guided all at once from the connected position to the completely disconnected position but is held at a weak torque transmission position P1 between the connected position and the completely disconnected position in accordance with the predicted dog collision duration Ta. More specifically, it is controlled to be at the weak torque transmission position P1 for a weak torque transmission time Twt set in accordance with the dog collision duration Ta. Thereafter, the clutch 45 is controlled to be at the completely disconnected position. At the weak torque transmission position P1, the clutch 45 attenuatingly transmits the torque of the engine 15 to the main shaft 46. In the present preferred embodiment, the weak torque transmission position P1 is closer to the completely disconnected position than to a half clutch position P2.

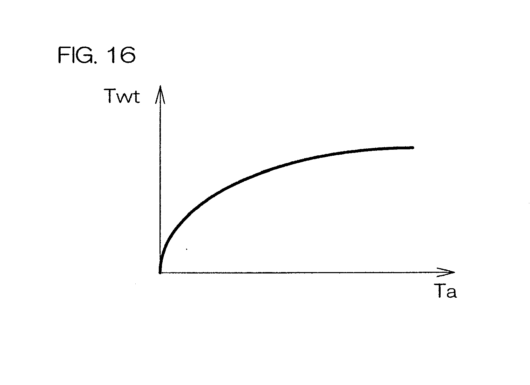

The weak torque transmission time Twt may, for example, be set to be longer as the dog collision duration Ta is longer, as shown by an example of characteristics in FIG. 16. With the example of FIG. 16, nonlinear characteristics are selected such that a rate of increase of the weak torque transmission time Twt is large in a region in which the dog collision duration Ta is comparatively short and the rate of increase of the weak torque transmission time Twt is set to decrease as the dog collision duration Ta increases.

If the torque from the engine 15 is disconnected completely when the dog collision occurs, the input of torque into the drive dog of the dog clutch is stopped. The drive dog and the driven dog may thus co-rotate for a long time in the dog collision state. Therefore, with the present preferred embodiment, the clutch 45 is connected in the weak torque transmission state for the weak torque transmission time Twt that is in accordance with the dog collision duration Ta. The relative speed between the drive dog and the driven dog can thereby be maintained to be comparatively high to achieve early resolution of the dog collision and put the drive dog and the driven dog in the engaged state. The drive cutoff time can thereby be shortened to improve the feeling during gear-change.

If the weak torque transmission time Twt is set to a fixed value, there is a possibility for the torque from the engine 15 to be input into the drive dog even during the dog entry. In this case, the relative speed of the drive dog and the driven dog may become excessively high so that a large impact noise occurs when the drive dog and the driven dog engage and this may cause an abnormal noise or vibration. Therefore with the present preferred embodiment, the weak torque transmission time Twt that is in accordance with the predicted dog collision duration Ta is set to achieve both early resolution of the dog collision and alleviation of the impact during dog entry at the same time.

Operations in a case where the weak torque transmission time is set to 0, that is, a case where the clutch 45 is transitioned immediately from the connected state to the completely disconnected state without maintaining it in the weak torque transmission state are indicated by alternate long and two short dashed lines as a comparative example in FIG. 15. That is, as a result of the torque input into the drive dog being stopped, the drive dog and the driven dog co-rotate and the dog collision duration becomes long as indicated by reference symbols 144 and 145. The state in which the clutch 45 is completely disconnected thus becomes long so that the drive cutoff time becomes long and the feeling during gear-change becomes poor.

When the shift cam angle reaches the angle of the newly selected gear stage and dog entry is achieved, the control unit 40 controls the clutch actuator 51 at a time t11 and makes the clutch 45 transition from the completely disconnected state to the half clutch state as indicated by a reference symbol 145. Drive force transmission to the rear wheel 7 is thereby recovered. Other operations are the same as that of the first preferred embodiment.

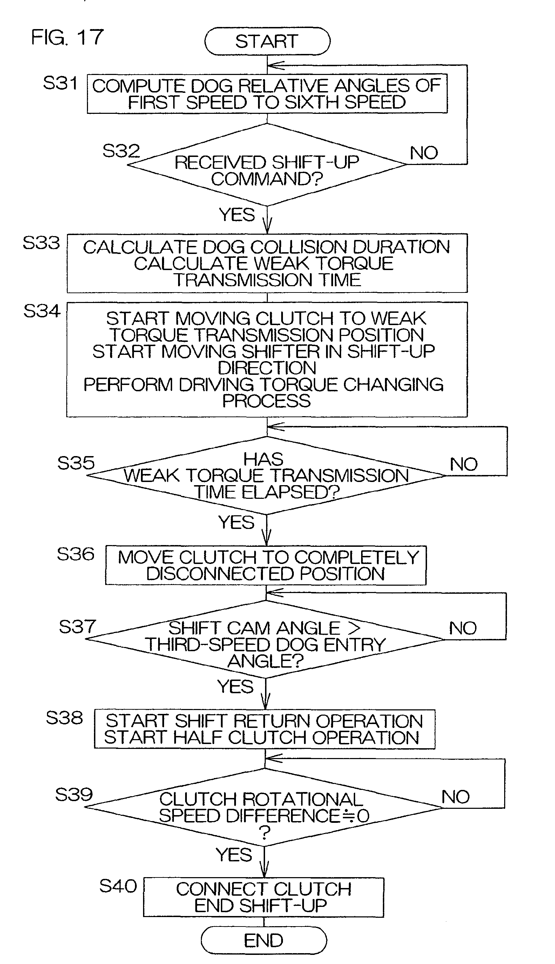

FIG. 17 is a flowchart for describing a control example executed by the control unit 40. The control unit 40 constantly computes the relative angles of the drive dogs and the driven dogs at the dog clutches of the first speed gear stage to the sixth speed gear stage (step S31). Upon receiving a shift-up command (step S32), the control unit 40 computes the dog collision duration and further calculates the weak torque transmission time accordingly (step S33).

The control unit 40 then starts the gear-change operation. That is, the control unit controls the clutch actuator 51 to move the clutch 45 to the weak torque transmission position (step S34). Also, the control unit 40 controls the shift actuator 52 to start moving the shifter 52A in the shift-up direction (step S34). Further, the control unit 40 executes the process for changing the output of the engine 15 by controlling the ignition operation, the fuel injection operation, the throttle opening degree, etc. (step S34).

After waiting for the elapse of the weak torque transmission time (step S35), the control unit 40 controls the clutch actuator 51 to move the clutch 45 to the completely disconnected position (step S36). The control unit 40 then judges whether or not the shift cam angle has exceeded the dog entry angle of the third speed gear stage (step S37) and, if an affirmative judgment is made here, controls the shift actuator 52 to perform the shift return operation of returning the shifter 52A to the neutral position (step S38). Further, the control unit 40 controls the clutch actuator 51 to guide the clutch 45 to the half clutch position (step S38).

Thereafter, the control unit 40 waits for the rotational speed difference of the drive side friction member 45a and the driven side frictional member 45b of the clutch 45 to be resolved (step S39), and then controls the clutch actuator 51 to put the clutch 45 in the connected state and ends the shift-up operation (step S40).

As described above, with the present preferred embodiment, whether or not a dog collision of the drive dog and the driven dog to be engaged will occur is predicted, and if the dog collision is predicted to occur, the duration thereof is predicted. By the gear-change operation being controlled based on the prediction results, problems due to the dog collision can be avoided or alleviated. Specifically, the weak torque transmission time is set in accordance with the predicted dog collision duration and the clutch 45 is controlled to be in the weak torque transmission state for the set time. Complete disconnection of the torque from the engine 15 can thereby be delayed and the relative speed of the drive dog and the driven dog can be maintained at a large value to achieve early resolution of the dog collision. The influences of the dog collision, especially the uncomfortable feeling felt by the user can thereby be reduced. Also, the weak torque transmission time is set appropriately in accordance with the prediction result of the dog collision duration and the relative speed between the drive dog and the driven dog thus does not become excessively large during dog entry. The impact at engagement of the drive dog and the driven dog can thus be reduced and the occurrences of abnormal noise and vibration that accompany the impact can be suppressed.

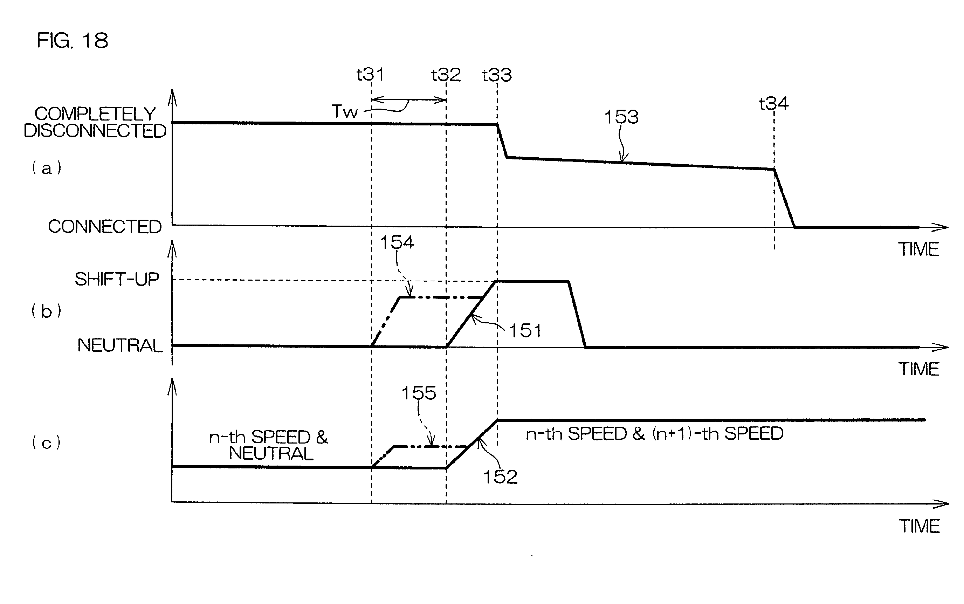

FIG. 18 shows an example where the first preferred embodiment is applied to a dual clutch transmission. FIG. 18(a) shows the position of the clutch corresponding to the gear stage (next stage) after gear-change, FIG. 18(b) shows the position of the shifter, and FIG. 18(c) shows the angle of the shift cam. A dual clutch transmission is a transmission apparatus with which the clutches and gears are divided into a first system corresponding to odd-number gear stages and a second system corresponding to even-number gear stages and the gear-change operation is performed using the two systems alternately.

For the sake of description, a case where an n-th speed gear stage is selected at the first system and the second system is set at neutral shall be assumed. In this case, the clutch is connected, the torque of the engine is transmitted, and the dog clutch of the n-th speed gear stage is in the engaged state in the first system. In the second system, the clutch is in the completely disconnected state and all dog clutches are in the released states. A case shall be assumed where the shift actuator actuates in response to receiving a gear-change command from this state and a state in which the respective dog clutches of the n-th speed gear stage and the n+1-th speed gear stage are engaged is arrived at in the first system and the second system. That is, in the first system, the dog clutch of the n-th speed gear stage is maintained in the engaged state, and in the second system, the dog clutch of the n+1-th speed gear stage is put in the engaged state. Thereafter, the clutch of the first system is disconnected and the clutch of the second system is connected so that the torque of the engine is transmitted to a drive wheel via the second system.

To describe more specifically, upon receiving a gear-change command at a time t31, the control unit maintains the clutch (next stage clutch) of the second system, which is in the disconnected state, in the disconnected state and starts the gear-change operation in the second system at a time t32 after the elapse of the waiting time Tw that is adjusted in timing so that a dog collision will not occur. In the example of FIG. 18, the shift actuator is made to actuate and the shifter is thereby actuated as indicated by a reference symbol 151. Accordingly, the shift cam angle changes as indicated by a reference symbol 152 and a state in which the dog clutch of the n+1-th speed gear stage is engaged in the second system is entered. At a time t33 at which the dog entry is completed, the clutch of the second system is controlled from the completely disconnected state to the half clutch state indicated by a reference symbol 153. Further, waiting is performed for the relative speed between the input side and output side friction members of the clutch of the second system to become substantially zero, and at a time t34, the clutch of the second system is driven to the connected state. The clutch of the first system is put in the completely disconnected state immediately before the clutch of the second system is put in the half clutch state.

An operation example of making the shift actuator actuate immediately upon receiving the gear-change command is indicated by alternate long and two short dashed lines in FIG. 18. In this case, a dog collision occurs at the dog clutch of the n+1-th speed gear stage and therefore the shift angle and the shift cam angle stops changing in the middle as indicated by reference symbols 154 and 155. When the dog collision is resolved, the angles start varying and the dog entry state is entered. In this case, the time from the gear-change command to the completion of dog entry becomes long or an impact noise accompanying the dog collision may occur and the feeling during gear-change may thus become poor.

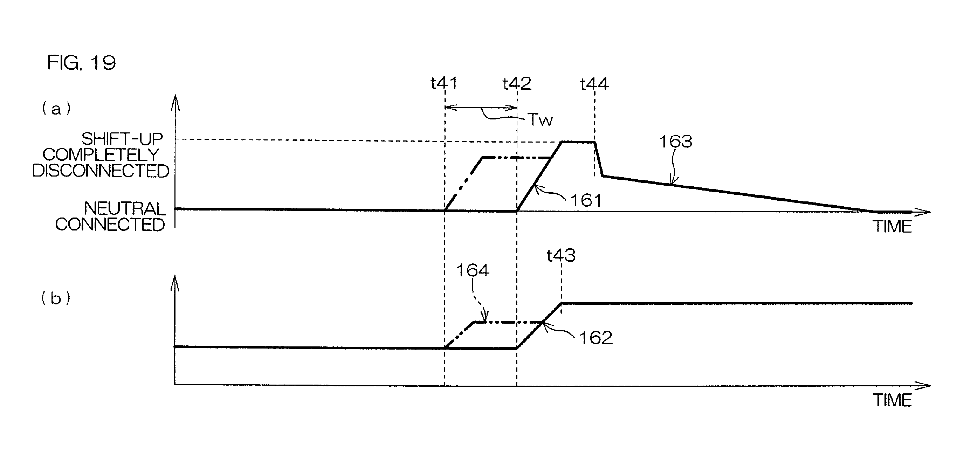

FIG. 19 shows an operation example for a case where the first preferred embodiment is applied to an arrangement in which the shifter and the clutch are actuated by an actuator in common. That is, both the clutch and the shifter are actuated by making the actuator in common actuate. Such an arrangement is described, for example, in US 2008161155 A1. In the present preferred embodiment, the actuator in common corresponds to being the actuator unit in the present invention. That is, in the present preferred embodiment, a single actuator unit in common is provided for actuating both the gear switching mechanism and the clutch.

FIG. 19(a) shows the clutch position and the shifter position that change in linkage and FIG. 19(b) shows the angle of the shift cam. Upon receiving a gear-change command at a time t41, the control unit starts the gear-change operation at a time t42 after the elapse of the waiting time Tw that is adjusted so that a dog collision will not occur. The actuator in common thus actuates and therefore as indicated by a reference symbol 161, the clutch undergoes the state transition from the connected state to the disconnected state and at the same time, the shifter moves from the neutral position to the shift-up position. The shift cam angle changes accordingly as indicated by a reference symbol 162. Then at a time t44 after a time t43 at which the shift cam angle reaches the dog entry state, the actuator in common is controlled to guide the clutch from the completely disconnected position to the half clutch position. Thereafter, as indicated by a reference symbol 163, the clutch is gradually guided to the connected state with the displacement speed being set to a low speed. At the same time, the shifter also returns to the neutral position.

An operation example in which the gear-change operation is started immediately after receiving a gear-change command is indicated by alternate long and two short dashed line in FIG. 19. In this case, when the actuator in common is made to actuate, the shift cam angle stops changing at an intermediate angle as indicated by a reference symbol 164 due to a dog collision, and when the dog collision is resolved, the shift cam angle starts changing again and the dog entry state is attained. In this case, the time required for the dog entry state to be reached and the clutch to be put in the half clutch state to enable torque transmission from the gear-change command becomes long. Or, an impact accompanying the dog collision occurs and the feeling may become poor.

Although preferred embodiments of the present invention have been described, the present invention may be carried out in yet other modes as well. For example, with each of the preferred embodiments, the rotations of the main shaft 46 and the driveshaft 47 are respectively detected by the main shaft rotation sensor 61 and the driveshaft rotation sensor 62. However, the control unit 40 has information concerning the gear stages, and therefore if the rotation information of one of either the main shaft 46 or the driveshaft 47 is obtained, the rotation information of the other can be determined by computation. One of either of the main shaft rotation sensor 61 and the driveshaft rotation sensor 62 may thus be omitted.

Further, for the calculation of the dog relative angle, it suffices to obtain the rotational angle or the rotational speed of one or a plurality of rotating shafts among the plurality of rotating shafts disposed in the driving force transmission path leading from the engine 15 to the rear wheel 7. The rotating shafts for this purpose do not need to be the main shaft 46 or the driveshaft 47. Also, although with each of the preferred embodiments, the teeth of transmission gears are detected by the rotation sensors 61 and 62, an arrangement is also possible where rotors with projections other than the transmission gears are provided on the rotating shafts, such as the shafts 46 and 47, etc., and the projections are detected by rotation sensors.

Also, although with each of the preferred embodiments, the engine 15 (internal combustion engine) is the power source, a power source of another form may be used instead. Specifically, an electric motor may be used as the power source, or a hybrid type power source that includes an electric motor and an engine may be used. In other words, the power source may include an internal combustion engine and may include an electric motor.

Also, although with each of the preferred embodiments, the transmission gears are integrally provided on the dogs, the dogs and the transmission gears may be arranged as separate components.

Also, although with each of the preferred embodiments, the clutch actuator 51 and the shift actuator 52 are electrically powered, these may be arranged from hydraulic actuators instead.

Also, although with the first preferred embodiments, the starting timing of the gear-change operation is adjusted so that a dog collision can be avoided, a dog collision of a short time may be allowed and the starting timing of the gear-change operation may be adjusted so that the time during which a dog collision occurs is shortened.

Further, although with each of the preferred embodiments, a motorcycle is cited as an example of a vehicle to which the automatic transmission is applied, the automatic transmission according to the present invention may be applied to saddle type vehicles of other forms and to vehicles of forms other than saddle type vehicles as well.

While preferred embodiments of the present invention have been described in detail, these are merely specific examples used to clarify the technical contents of the present invention, and the present invention should not be interpreted as being limited to only these specific examples, and the scope of the present invention shall be limited only by the accompanying claims.

**Claims**

1. An automatic transmission (20) that changes a rotation speed of a main shaft (46), to which a torque from a power source (15) is transmitted, and transmits the rotation of the changed rotation speed to a driveshaft (47), the automatic transmission (20) comprising:

   a plurality of dog clutches (C1-C6) that each include a drive dog (53, 54) provided on the main shaft (46) or on the driveshaft (47) so as to be in constant synchronous rotation with the main shaft (46), and a driven dog (54, 53) provided on the main shaft (46) or on the driveshaft (47) so as to be in constant synchronous rotation with the driveshaft (47);
   a switching mechanism (50) configured to cause the drive dog (53, 54) and the driven dog (54, 53) of each of the dog clutches (C1-C6) to approach and separate from each other to engage and disengage the drive dog (53, 54) and the driven dog (54, 53) of each of the dog clutches (C1-C6) to switch gears (Ma, Mb, Mc, Md, Me, Mf; Da, Db, Dc, Dd, De, and Df) transmitting a driving force between the main shaft (46) and the driveshaft (47);
   a clutch (45) switchable between a connected state, in which the torque is transmitted sliplessly from the power source (15) to the main shaft (46), and a disconnected state, in which a portion of the torque is slippingly transmitted from the power source to the main shaft (46) or in which the torque is not transmitted from the power source to the main shaft (46);
   an actuator unit (51, 52) for actuating at least the switching mechanism (50) among the clutch (45) and switching mechanism (50); and
   a control unit (40),
   **characterized in that**
   the control unit (40) stores information concerning the gear stages,
   the control unit (40) comprises a gear-change control means (80) configured to control a gear-change operation, including a dog engaging operation of making the actuator unit (51, 52) actuate to engage the drive dog (53, 54) and the driven dog (54, 53) of one of the dog clutches (C1-C6), based on a relative rotational position of the drive dog (53, 54) and the driven dog (54, 53) to be engaged,
   the automatic transmission is arranged to transmit the driving force of the power source (15) that is input into the main shaft (46) to a drive wheel (7) via the driveshaft (47), and the gear-change control means (80) is configured to determine the relative rotational positions of the drive dogs (53, 54) and the driven dogs (54, 53) of the plurality of dog clutches (C1-C6) based on a rotational angle or a rotational speed of any one of a plurality of rotating shafts (46, 47) disposed in a driving force transmission path from the power source (15) to the drive wheel (7) and the information concerning the gear stages.

2. The automatic transmission according to claim 1, wherein, after receiving a gear-change command, the gear-change control means (80) is configured to control a starting timing of the gear-change operation so that the engaged state is attained without occurrence of a dog collision in which the drive dog (53, 54) and the driven dog (54, 53) come in contact before engagement.

3. The automatic transmission according to claim 2, wherein, after receiving the gear-change command, the gear-change control means (80) is configured to control an actuation timing of the actuator unit (51, 52) so that the drive dog (53, 54) and the driven dog (54, 53) are put in the engaged state without occurrence of the dog collision.

4. The automatic transmission according to claim 2 or 3, wherein the gear-change command is generated in response to a gear-change operating unit (60) that is operated by an operator or is generated automatically by a control unit (40) based on vehicle travelling information.

5. The automatic transmission according to any one of claims 1 to 4, wherein, for the gear-change operation, the gear-change control means (80) is configured to control the actuator unit (51, 52) based on the relative rotational position of the drive dog (53, 54) and the driven dog (54, 53) to be engaged.

6. The automatic transmission according to claim 5, wherein, for the gear-change operation, the gear-change control means (80) is configured to set, based on the relative rotational position of the drive dog (53, 54) and the driven dog (54, 53) to be engaged, a clutch actuation starting timing, at which the clutch (45) starts a state transition from the connected state to the disconnected state, and is configured to control the actuator unit (51, 52) based on the clutch actuation starting timing.

7. The automatic transmission according to claim 5 or 6, wherein, for the gear-change operation, the gear-change control means (80) is configured to set, based on the relative rotational position of the drive dog (53, 54) and the driven dog (54, 53) to be engaged, a gear switching starting timing, at which the actuation of the switching mechanism (50) starts, and is configured to control the actuator unit (51, 52) based on the gear switching starting timing.

8. The automatic transmission according to any one of claims 1 to 7, wherein, for the gear-change operation, the gear-change control means (80) is configured to set, based on the relative rotational position of the drive dog (53, 54) and the driven dog (54, 53) to be engaged, an output changing timing, at which an output of the power source (15) is changed, and is configured to change the output of the power source (15) at the set output changing timing.

9. The automatic transmission according to any one of claims 1 to 8, wherein in response to receiving the gear-change command, the gear-change control means (80) is configured to predict whether or not a dog collision, in which the drive dog (53, 54) and the driven dog (54, 53) come in contact before engaging, will occur and, if a dog collision is predicted to occur, predict a duration of the dog collision, and is configured to control the gear-change operation in accordance with the prediction result.

10. The automatic transmission according to claim 9, wherein the gear-change control means (80) is configured to predict the duration of the dog collision, set a weak torque transmission time in accordance with the predicted duration of the dog collision, and control the clutch (45) to be in a weak torque transmission state, in which the torque from the power source (15) is attenuatingly transmitted to the main shaft (46), for the weak torque transmission time in the middle of switching the clutch (45) from the connected state to the state in which the torque transmission from the power source to the main shaft (46) is disconnected.

11. The automatic transmission according to any one of claims 1 to 10, wherein the gear change control means (80) is configured to:

   initialize the relative rotational position of the drive dog (53, 54) and the driven dog (54, 53) of each of the dog clutches (C1-C6) when the power source is accelerated with the drive dog (53, 54) and the driven dog (54, 53) of the dog clutch being in an engaged state, and
   constantly calculate the relative rotational position in the dog clutch after the initialization.

12. The automatic transmission according to any one of claims 1 to 11, further comprising a rotation sensor (61, 62) for detecting the rotation of the rotating shaft (46, 47) by detecting a projection disposed on the rotating shaft (46, 47), wherein the gear-change control means (80) is configured to acquire the rotational angle or the rotational speed of the rotating shaft (46, 47) using an output signal of the rotation sensor (61, 62).

**Patentansprüche**

1. Automatikgetriebe (20), das eine Drehzahl einer Hauptwelle (46), auf die ein Drehmoment aus einer Leistungsquelle (15) übertragen wird, ändert und das die Rotation mit der geänderten Drehzahl auf eine Antriebswelle (47) überträgt, wobei das Automatikgetriebe (20) umfasst:

   mehrere Klauenkupplungen (C1-C6), die jeweils eine Antriebsklaue (53, 54) aufweisen, die auf der Hauptwelle (46) oder auf der Antriebswelle (47) so vorgesehen ist, dass sie in konstanter synchroner Rotation mit der Hauptwelle (46) ist, und eine angetriebene Klaue (54, 53) aufweisen, die auf der Hauptwelle (46) oder auf der Antriebswelle (47) so vorgesehen ist, dass sie in konstanter synchroner Rotation mit der Antriebswelle (47) ist; einen Schaltmechanismus (50), der ausgebildet ist, die Antriebsklaue (53, 54) und die angetriebene Klaue (54, 53) jeder Klauenkupplung (C1-C6) zu veranlassen, sich einander anzunähern und voneinander zu trennen, um die Antriebsklaue (53, 54) und die angetriebene Klaue (54, 53) jeder Klauenkupplung (C1-C6) zu koppeln und zu entkoppeln, um Zahnräder (Ma, Mb, Mc, Nd, Me, Mf; Da, Db, Dc, Dd, De und Df), die eine Antriebskraft zwischen der Hauptwelle (46) und der Antriebswelle (47) übertragen, zu schalten; eine Kupplung (45), die zwischen einem gekoppelten Zustand, in welchem das Drehmoment schlupffrei von der Leistungsquelle (15) auf die Hauptwelle (46) übertragen wird, und einem entkoppelten Zustand, in welchem ein Teil des Drehmoments mit Schlupf von der Leistungsquelle zu der Hauptwelle (46) übertragen wird oder in welchem das Drehmoment von der Leistungsquelle zu der Hauptwelle (46) nicht übertragen wird, schaltbar ist; eine Aktuator-Einheit (51, 52), um von der Kupplung (45) und dem Schaltmechanismus (50) zumindest den Schaltmechanismus (50) zu betätigen; und eine Steuereinheit (40), die Steuereinheit (40) Information bezüglich der Getriebestufen speichert, die Steuereinheit (40) eine Gangwechsel-Steuereinrichtung (40) aufweist, die ausgebildet ist, einen Gangwechselvorgang, der einen Klauenkopplungsvorgang beinhaltet, um die Aktuator-Einheit (51, 52) zu veranlassen, die Antriebsklaue (53, 54) und die angetriebene Klaue (54, 53) einer der Klauenkupplungen (C1-C6) zu koppeln, auf der Grundlage einer relativen Drehposition der zu koppelnden Antriebsklaue (53, 54) und der angetriebenen Klaue (54, 52) zu steuern, wobei das Automatikgetriebe ausgebildet ist, die Antriebskraft der Leistungsquelle (15), die in die Hauptwelle (46) eingespeist wird, auf ein Antriebsrad (7) über die Antriebswelle (47) zu übertragen, und wobei die Gangwechsel-Steuereinrichtung (80) ausgebildet ist, die relativen Drehposition an der Antriebsklaue (53, 54) und der angetriebenen klauen (54, 53) der mehreren Klauenkupplungen (C1-C6) auf der Grundlage eines Drehwinkels oder einer Drehzahl einer von mehreren rotierenden Wellen (46, 47), die in einem Antriebskraftübertragungspfad von der Leistungsquelle 15) zu dem Antriebsrad (7) angeordnet sind, und der Information bezüglich der Getriebestufen zu ermitteln.

2. Automatikgetriebe nach Anspruch 1, wobei nach Empfang eines Gangwechselbefehls die Gangwechsel-Steuereinrichtung (80) ausgebildet ist, einen Startzeitpunkt des Gangwechselvorgangs so zu steuern, dass der gekoppelte Zustand ohne Auftreten einer Klauenkollision erreicht wird, in welcher die Antriebsklaue (53, 54) und die angetriebene Klaue (54, 53) vor der Kopplung in Kontakt kommen.

3. Automatikgetriebe nach Anspruch 2, wobei nach Empfang des Gangwechselbefehls die Gangwechsel-Steuereinrichtung (80) ausgebildet ist, einen Betätigungszeitpunkt der Aktuator-Einheit (51, 52) so zu steuern, dass die Antriebsklaue (53, 54) und die angetriebene Klaue (54, 53) ohne Auftreten der Klauenkollision in den gekoppelten Zustand versetzt werden.

4. Automatikgetriebe nach Anspruch 2 oder 3, wobei der Gangwechselbefehl in Reaktion auf eine Gangwechsel-Bedieneinheit (60), die von einem Bediener bedient wird, oder automatisch durch eine Steuereinheit (40) auf der Grundlage von Fahrzeugreiseinformation erzeugt wird.

5. Automatikgetriebe nach einem der Ansprüche 1 bis 4, wobei für den Gangwechselvorgang die Gangwechsel-Steuereinrichtung (80) ausgebildet ist, die Aktuator-Einheit (51, 52) auf der Grundlage der relativen Rotationsposition der zu koppelnden Antriebsklaue (53, 54) und der angetriebenen Klaue (54, 53) zu steuern.

6. Automatikgetriebe nach Anspruch 5, wobei für den Gangwechselvorgang die Gangwechsel-Steuereinrichtung (80) ausgebildet ist, auf der Grundlage der relativen Rotationsposition der zu koppelnden Antriebsklaue (53, 54) und der angetriebenen Klaue (54, 53) einen Kupplungsbetätigungsstartzeitpunkt festzulegen, bei welchem die Kupplung (45) einen Zustandsübergang von dem gekoppelten Zustand in den entkoppelten Zustand beginnt, und die Gangwechsel-Steuereinrichtung (80) ausgebildet ist, die Aktuator-Einheit (51, 52) auf der Grundlage des Kupplungsbetätigungsstartzeitpunkt zu steuern.

7. Automatikgetriebe nach Anspruch 5 oder 6, wobei für den Gangwechselvorgang die Gangwechsel-Steuereinrichtung (80) ausgebildet ist, auf der Grundlage der relativen Rotationsposition der zu koppelnden Antriebsklaue (53, 54) und der angetriebenen Klaue (54, 52) einen Zahnradumschaltstartzeitpunkt festzulegen, bei welchem die Betätigung des Schaltmechanismus (50) beginnt, und die Gangwechsel-Steuereinrichtung (80) ausgebildet ist, die Aktuator-Einheit (51, 52) auf der Grundlage des Zahnradschaltstartzeitpunkts zu steuern.

8. Automatikgetriebe nach einem der Ansprüche 1 bis 7, wobei für den Gangwechselvorgang die Gangwechsel-Steuereinrichtung (80) ausgebildet ist, auf der Grundlage der relativen Rotationsposition der zu koppelnden Antriebsklaue (53, 54) und der angetriebenen Klaue (54, 53) einen Ausgabeänderungszeitpunkt festzulegen, bei welchem eine Ausgabe der Leistungsquelle (15) geändert wird, und die Gangwechsel-Steuereinrichtung (80) ist ausgebildet, die Ausgabe der Leistungsquelle (15) zu dem festgelegten Ausgabeänderungszeitpunkt zu ändern.

9. Automatikgetriebe nach einem der Ansprüche 1 bis 8, wobei in Reaktion auf den Empfang des Gangwechselbefehls die Gangwechsel-Steuereinrichtung (80) ausgebildet ist vorherzusagen, ob eine Klauenkollision, bei der die Antriebsklaue (53, 54) und die angetriebene Klaue (54, 53) vor einer Kopplung in Kontakt kommen, auftreten wird oder nicht, und wenn das Auftreten einer Klauenkollision vorhergesagt wird, eine Dauer der Klauenkollision vorherzusagen, und die Gangwechsel-Steuereinrichtung (80) ausgebildet ist, den Gangwechselvorgang gemäß dem Vorhersageergebnis zu steuern.

10. Automatikgetriebe nach Anspruch 9, wobei die Gangwechsel-Steuereinrichtung (80) ausgebildet ist, die Dauer der Klauenkollision vorherzusagen, eine Zeitdauer für Übertragung eines schwachen Drehmoments entsprechend der vorhergesagten Dauer der Klauenkollision festzulegen und die Kupplung (45) so zu steuern, dass sie in einem Zustand für Übertragung eines schwachen Drehmoments, in welchem das Drehmoment aus der Leistungsquelle (15) in abgeschwächter Weise auf die Hauptwelle (46) übertragen wird, während der Zeitdauer für Übertragung eines schwachen Drehmoments in der Mitte des Schaltens der Kupplung (45) von dem gekoppelten Zustand in den Zustand ist, in welchem die Drehmomentsübertragung aus der Leistungsquelle zu der Hauptwelle (46) unterbrochen wird.

11. Automatikgetriebe nach einem der Ansprüche 1 bis 10, wobei die Gangwechsel-Steuereinrichtung (80) ausgebildet ist, um:

die relative Rotationsposition der Antriebsklaue (53, 54) und der angetriebenen Klaue (54, 53) jeder Klauenkupplung (C1-C6) zu initialisieren, wenn die Leistungsquelle beschleunigt wird, wobei die Antriebsklaue (53, 54) und die angetriebene Klaue (54, 53) in einem gekoppelten Zustand sind, und
die relative Rotationsposition in der Klauenkupplung nach der Initialisierung stetig zu berechnen.

12. Automatikgetriebe nach einem der Ansprüche 1 bis 11, das ferner einen Drehsensor (61, 62) zur Erfassung der Rotation der rotierenden Welle (46, 47) durch Erfassung eines Überstands, der an der Rotationswelle (46, 47) angeordnet ist, aufweist, wobei die Gangwechsel-Steuereinrichtung (80) ausgebildet ist, den Drehwinkel oder die Drehzahl der rotierenden Welle (46, 47) unter Anwendung eines Ausgangssignals des Drehsensors (61, 62) zu erhalten.

**Revendications**

1. Transmission automatique (20) qui modifie la vitesse de rotation d'un arbre principal (46), auquel est transmis un couple provenant d'une source de puissance (15), et transmet la rotation de la vitesse de rotation modifiée à un arbre d'entraînement (47), la transmission automatique (20) comprenant :

une pluralité d'embrayages à griffes (C1 à C6) incluant chacun une griffe d'entraînement (53, 54) disposée sur l'arbre principal (46) ou sur l'arbre d'entraînement (47) de façon à être en rotation synchrone constante avec l'arbre principal (46) et une griffe entraînée (54, 53) disposée sur l'arbre principal (46) ou sur l'arbre d'entraînement (47) de façon à être en rotation synchrone constante avec l'arbre d'entraînement (47) ;
un mécanisme de commutation (50) configuré pour provoquer le rapprochement et la séparation entre elles de la griffe d'entraînement (53, 54) et de la griffe entraînée (54, 53) de chacun des embrayages à griffes (C1 à C6) pour embrayer et débrayer la griffe d'entraînement (53, 54) et la griffe entraînée (54, 53) de chacun des embrayages à griffes (C1 à C6) avec des mécanismes de commutation (Ma, Mb, Mc, Md, Me, Mf; Da, Bd, Dc, Dd, De et Df) transmettant une force motrice entre l'arbre principal (46) et l'arbre d'entraînement (47) ;

un embrayage (45) commutable entre un état connecté, dans lequel le couple est transmis sans patinage de la source de puissance (15) à l'arbre principal (46), et un état déconnecté, dans lequel une partie du couple est transmise sans patinage de la source de puissance à l'arbre principal (46) ou dans lequel le couple n'est pas transmis de la source de puissance à l'arbre principal (46) ;

une unité d'actionnement (51, 52) pour actionner au moins le mécanisme de commutation (50) parmi l'embrayage (45) et le mécanisme de commutation (50) ; et

une unité de commande (40),

**caractérisée en ce que**

l'unité de commande (40) mémorise des informations concernant les vitesses,

l'unité de commande (40) comprend un moyen de commande de changement de vitesse (80) configuré pour commander une opération de changement de vitesse, incluant une opération d'embrayage de griffe pour que l'unité d'actionnement (51, 52) actionne l'embrayage de la griffe d'entraînement (53, 54) et de la griffe entraînée (54, 53) de l'un des embrayages à griffes (C1 à C6), sur la base de la position de rotation relative de la griffe d'entraînement (53, 54) et de la griffe entraînée (54, 53) à embrayer,

la transmission automatique est agencée pour transmettre la force motrice de la source de puissance (15) qui est appliquée en entrée à l'arbre principal (46), à une roue motrice (7) par l'intermédiaire de l'arbre d'entraînement (47), et

le moyen de commande de changement de vitesse (80) est configuré pour déterminer les positions de rotation relative des griffes d'entraînement (53, 54) et des griffes entraînés (54, 53) de la pluralité d'embrayages à griffes (C1 à C6) sur la base de l'angle de rotation ou de la vitesse de rotation d'un arbre quelconque d'une pluralité d'arbres rotatifs (46, 47) disposés dans un trajet de transmission de force motrice de la source de puissance (15) à la roue motrice (7) et des informations concernant les vitesses.

2. Transmission automatique selon la revendication 1, dans laquelle, après réception d'une commande de changement de vitesse, le moyen de commande de changement de vitesse (80) est configuré pour commander le temps de démarrage de l'opération de changement de vitesse de sorte que l'état embrayé est atteint sans apparition de collision de griffes dans laquelle la griffe d'entraînement (53, 54) et la griffe entraînée (54, 53) viennent en contact avant embrayage.

3. Transmission automatique selon la revendication 2, dans laquelle, après réception de la commande de changement de vitesse, le moyen de commande de changement de vitesse (80) est configuré pour commander le temps d'actionnement de l'unité d'actionnement (51, 52) de sorte que la griffe d'entraînement (53, 54) et la griffe entraînée (54, 53) sont mises dans l'état embrayé sans apparition de la collision de griffes.

4. Transmission automatique selon la revendication 2 ou 3, dans laquelle la commande de changement de vitesse est générée en réponse à une unité d'actionnement de changement de vitesse (60) qui est actionnée par un opérateur ou qui est générée automatiquement par une unité de commande (40) sur la base des informations de déplacement du véhicule.

5. Transmission automatique selon l'une quelconque des revendications 1 à 4, dans laquelle, pour l'opération de changement de vitesse, le moyen de commande de changement de vitesse (80) est configuré pour commander l'unité d'actionnement (51, 52) sur la base de la position de rotation relative de la griffe d'entraînement (53, 54) et de la griffe entraînée (54, 53) à embrayer.

6. Transmission automatique selon la revendication 5, dans laquelle, pour l'opération de changement de vitesse, le moyen de commande de changement de vitesse (80) est configuré pour régler, sur la base de la position de rotation relative de la griffe d'entraînement (53, 54) et de la griffe entraînée (54, 53) à embrayer, le temps de démarrage d'actionnement d'embrayage auquel l'embrayage (45) commence une transition d'état de l'état connecté à l'état déconnecté et est configuré pour commander l'unité d'actionnement (51, 52) sur la base du temps de démarrage d'actionnement d'embrayage.

7. Transmission automatique selon la revendication 5 ou 6, dans laquelle, pour l'opération de changement de vitesse, le moyen de commande de changement de vitesse (80) est configuré pour régler, sur la base de la position de rotation relative de la griffe d'entraînement (53, 54) et de la griffe entraînée (54, 53) à embrayer, le temps de démarrage de changement de vitesse auquel l'actionnement du mécanisme de commutation (50) démarre et est configuré pour commander l'unité d'actionnement (51, 52) sur la base du temps de démarrage de changement de vitesse.

8. Transmission automatique selon l'une quelconque des revendications 1 à 7, dans laquelle, pour l'opération de changement de vitesse, le moyen de commande de changement de vitesse (80) est configuré pour régler, sur la base de la position de rotation relative de la griffe d'entraînement (53, 54) et de la griffe entraînée (54, 53) à embrayer, le temps de changement de puissance auquel la puissance de la source de puissance (15) est changée et est configuré pour modifier la puissance de la source de puissance (15) au temps de changement de puissance réglé.

9. Transmission automatique selon l'une quelconque des revendications 1 à 8, dans laquelle, en réponse à la réception de la commande de changement de vitesse, le moyen de commande de changement de vitesse (80) est configuré pour prédire si une collision de griffes, dans laquelle la griffe d'entraînement (53, 54) et la griffe entraînée (54, 53) viennent en contact avant embrayage, va se produire ou non et, s'il prédit qu'une collision de griffes doit se produire, prédire la durée de la collision de griffes, et est configuré pour commander l'opération de changement de vitesse en fonction du résultat de la prédiction.

10. Transmission automatique selon la revendication 9, dans laquelle le moyen de commande de changement de vitesse (80) est configuré pour prédire la durée de la collision de griffes, régler un temps de transmission de couple faible en fonction de la durée prédite de la collision de griffes et commander l'embrayage (45) de manière à être dans un état de transmission de couple faible dans lequel le couple de la source de puissance (15) est transmis de manière atténuée à l'arbre principal (46) pendant le temps de transmission de couple faible au milieu de la commutation de l'embrayage (45) de l'état connecté à l'état dans lequel la transmission du couple de la source de puissance à l'arbre principal (46) est déconnectée.

11. Transmission automatique selon l'une quelconque des revendications 1 à 10, dans laquelle le moyen de commande de changement de vitesse (80) est configuré pour :

initialiser la position de rotation relative de la griffe d'entraînement (53, 54) et de la griffe entraînée (54, 53) de chacun des embrayages à griffes (C1 à C6) lorsque la source de puissance est accélérée, la griffe d'entraînement (53, 54) et la griffe entraînée (54, 53) de l'embrayage à griffes étant dans l'état embrayé, et calculer constamment la position de rotation relative dans l'embrayage à griffes après initialisation.

12. Transmission automatique selon l'une quelconque des revendications 1 à 11, comprenant en outre un capteur de rotation (61, 62) pour détecter la rotation de l'arbre rotatif (46, 47) en détectant une projection disposée sur l'arbre rotatif (46, 47),
dans lequel le moyen de commande de changement de vitesse (80) est configuré pour acquérir l'angle de rotation ou la vitesse de rotation de l'arbre rotatif (46, 47) en utilisant le signal de sortie du capteur de rotation (61, 62).

FIG. 1

FIG. 2

FIG. 3

FIG. 4

FIG. 5A

FIG. 5B

FIG. 5C

FIG. 6A

FIG. 6B

FIG. 6C

FIG. 6D

FIG. 7

SHIFT-UP SWITCH — 60a
60
SHIFT-DOWN SWITCH — 60b

ENGINE ROTATION SENSOR — 65

MAIN SHAFT ROTATION SENSOR — 61

DRIVESHAFT ROTATION SENSOR — 62

THROTTLE OPERATION SENSOR — 66

GEAR POSITION SENSOR — 64

CLUTCH POSITION SENSOR — 63

CONTROL PORTION — 71

STORAGE PORTION — 72

CLUTCH ACTUATOR DRIVE CIRCUIT — 73

CLUTCH ACTUATOR — 51

SHIFT ACTUATOR DRIVE CIRCUIT — 74

SHIFT ACTUATOR — 52

ENGINE DRIVE CIRCUIT — 75

IGNITION PLUG — 29

INJECTOR — 31

VALVE ACTUATOR — 32

GEAR-CHANGE CONTROL PORTION — 80

DOG RELATIVE ANGLE CALCULATING PORTION — 81

TARGET DOG RELATIVE ANGLE CALCULATING PORTION — 82

40

20

EP 2 789 878 B1

31

FIG. 8

(a)

(b)

(c)

(d)

EP 2 789 878 B1

FIG. 9

EP 2 789 878 B1

FIG. 10

FIG. 11

```
              ( START )
                  │
    S1 ┌──────────────────────────────┐
       │ COMPUTE DOG RELATIVE ANGLES   │
       │ OF FIRST SPEED TO SIXTH SPEED │
       └──────────────────────────────┘
                  │
    S2      ◇ RECEIVED SHIFT-UP ◇ ── NO
            ◇     COMMAND?      ◇
                  │ YES
    S3 ┌──────────────────────────────┐
       │ CALCULATE TARGET DOG RELATIVE │
       │   ANGLE FOR THIRD SPEED        │
       └──────────────────────────────┘
                  │
    S4      ◇        DOG         ◇
            ◇ RELATIVE ANGLE OF  ◇ ── NO
            ◇  THIRD SPEED =     ◇
            ◇ TARGET DOG RELATIVE◇
            ◇      ANGLE?        ◇
                  │ YES
    S5 ┌──────────────────────────────────┐
       │ START MOVING CLUTCH POSITION TO    │
       │     DISCONNECTED POSITION          │
       │ START MOVING SHIFTER IN SHIFT-UP   │
       │            DIRECTION               │
       │ PERFORM DRIVING TORQUE CHANGING    │
       │            PROCESS                 │
       └──────────────────────────────────┘
                  │
    S6      ◇ SHIFT CAM ANGLE >  ◇ ── NO
            ◇ THIRD-SPEED DOG ENTRY ◇
            ◇      ANGLE?         ◇
                  │ YES
    S7 ┌──────────────────────────────┐
       │ START SHIFT RETURN OPERATION  │
       │ START HALF CLUTCH OPERATION   │
       └──────────────────────────────┘
                  │
    S8      ◇ CLUTCH ROTATIONAL  ◇ ── NO
            ◇ SPEED DIFFERENCE≒0  ◇
            ◇        ?            ◇
                  │ YES
    S9 ┌──────────────────────────────┐
       │      CONNECT CLUTCH           │
       │      END SHIFT-UP             │
       └──────────────────────────────┘
                  │
              ( END )
```

## FIG. 12

```
                    ┌─────────────┐
                    │    START    │
                    └─────────────┘
                           │
              S11  ┌───────────────┐
                   │     n=1       │
                   └───────────────┘
                           │
                          ◇
          S12      IS CURRENT              NO
                   GEAR STAGE = n-th SPEED ───────┐
                   AND IS ACCELERATION IN         │
                   PROGRESS?                      │
                          │                       │
                         YES                      │
                          ▼                       │
          S13  ┌───────────────────────────┐      │
               │ DOG RELATIVE ANGLE OF n-th │      │
               │ SPEED = 0                  │      │
               └───────────────────────────┘      │
                          │◄─────────────────────┘
          S14  ┌───────────────────────────┐
               │ CALCULATE DRIVE DOG        │
               │ ROTATIONAL SPEED Np FOR    │
               │ n-th SPEED                 │
               │ CALCULATE DRIVEN DOG       │
               │ ROTATIONAL SPEED Nw FOR    │
               │ n-th SPEED                 │
               └───────────────────────────┘
                          │
          S15  ┌───────────────────────────┐
               │ ADD (Np-Nw)×t (WHERE t IS  │
               │ THE COMPUTATION CYCLE) TO  │
               │ DOG RELATIVE ANGLE OF      │
               │ n-th SPEED                 │
               └───────────────────────────┘
                          │
                         ◇
          S16      DOG RELATIVE ANGLE        NO
                   OF n-th SPEED >         ───────┐
                   DOG GEOMETRY CYCLE OF          │
                   n-th SPEED?                    │
                          │                       │
                         YES                      │
                          ▼                       │
          S17  ┌───────────────────────────┐  S19 │
               │ SUBTRACT DOG GEOMETRY      │  ┌─────────┐
               │ CYCLE OF n-th SPEED FROM   │  │ n=n+1   │
               │ DOG RELATIVE ANGLE OF      │  └─────────┘
               │ n-th SPEED                 │      ▲
               └───────────────────────────┘      │
                          │◄─────────────────────┘│
                         ◇                         │
          S18      n = SIXTH SPEED?        NO      │
                   (IN THE CASE OF         ────────┘
                   SIX-SPEED TRANSMISSION)
                          │
                         YES
                          ▼
                    ┌─────────────┐
                    │     END     │
                    └─────────────┘
```

FIG. 13

FIG. 14

```
                    ┌──────────────┐
                    │    START     │
                    └──────────────┘
                           │
      ┌────────────────────────────────────────┐
S21   │  COMPUTE FIRST SPEED TO                 │
      │  SIXTH SPEED DOG RELATIVE               │
      │  ANGLES DA[1 TO 6]                      │
      └────────────────────────────────────────┘
                           │
             ╱──────────────────────────╲        NO
S22        ╱   RECEIVED SHIFT-UP          ╲──────────┐
           ╲   COMMAND?                   ╱          │
             ╲──────────────────────────╱           │
                      │ YES                          │
      ┌────────────────────────────────────┐        │
S23   │  CALCULATE THIRD-SPEED              │        │
      │  DOG RELATIVE SPEED VD              │        │
      └────────────────────────────────────┘        │
                      │                              │
      ┌────────────────────────────────────────┐    │
S24   │  GEAR-CHANGE END DOG RELATIVE           │    │
      │  ANGLE                                  │    │
      │  DAse=DA[3]+VD × GEAR-CHANGE            │    │
      │  REQUIRED TIME                          │    │
      └────────────────────────────────────────┘    │
                      │                              │
             ╱──────────────────────╲         NO     │
S25        ╱   DAse>                  ╲──────────────┤
           ╲   DOG GEOMETRY CYCLE     ╱              │
             ╲   ?                   ╱               │
               ╲──────────────────╱                 │
                      │ YES                          │
      ┌────────────────────────────────────┐         │
S26   │  SUBTRACT DOG GEOMETRY              │         │
      │  CYCLE FROM DAse                    │         │
      └────────────────────────────────────┘         │
                      │◄────────────────────────────┘
             ╱──────────────────────╲         NO
S27        ╱   DAse<                  ╲──────────────┐
           ╲   DOG COLLISION          ╱              │
             ╲  RESOLUTION ANGLE     ╱               │
               ╲   ?                ╱                │
                 ╲──────────────╱                    │
                      │ YES                          │
      ┌────────────────────────────────────┐         │
S28   │  DOG COLLISION DURATION =           │         │
      │  (DOG COLLISION RESOLUTION          │         │
      │  ANGLE - DAse)/VD                   │         │
      └────────────────────────────────────┘         │
                      │            ┌──────────────────────────────┐
                      │      S29   │  PREDICTED DOG               │
                      │            │  COLLISION DURATION = 0      │
                      │            └──────────────────────────────┘
                      │◄───────────────────────┘
                    ┌──────────────┐
                    │     END      │
                    └──────────────┘
```

FIG. 15

EP 2 789 878 B1

FIG. 16

FIG. 17

START

S31 COMPUTE DOG RELATIVE ANGLES OF FIRST SPEED TO SIXTH SPEED

S32 RECEIVED SHIFT-UP COMMAND? — NO

YES

S33 CALCULATE DOG COLLISION DURATION CALCULATE WEAK TORQUE TRANSMISSION TIME

S34 START MOVING CLUTCH TO WEAK TORQUE TRANSMISSION POSITION START MOVING SHIFTER IN SHIFT-UP DIRECTION PERFORM DRIVING TORQUE CHANGING PROCESS

S35 HAS WEAK TORQUE TRANSMISSION TIME ELAPSED? — NO

YES

S36 MOVE CLUTCH TO COMPLETELY DISCONNECTED POSITION

S37 SHIFT CAM ANGLE > THIRD-SPEED DOG ENTRY ANGLE? — NO

YES

S38 START SHIFT RETURN OPERATION START HALF CLUTCH OPERATION

S39 CLUTCH ROTATIONAL SPEED DIFFERENCE ≒ 0 ? — NO

YES

S40 CONNECT CLUTCH END SHIFT-UP

END

FIG. 18

EP 2 789 878 B1

FIG. 19

(a)

SHIFT-UP
COMPLETELY
DISCONNECTED

NEUTRAL
CONNECTED

t41  t42  t44

Tw

163

161

TIME

(b)

164

t43

162

TIME

EP 2 789 878 B1

**EP 2 789 878 B1**

**Patent documents cited in the description**

- EP 2075492 A1
- US 2008161155 A1